(19) Europäisches Patentamt / European Patent Office / Office européen des brevets

(11) **EP 4 369 632 A1**

(12) **EUROPEAN PATENT APPLICATION**
published in accordance with Art. 153(4) EPC

(43) Date of publication:
**15.05.2024 Bulletin 2024/20**

(21) Application number: **22860421.1**

(22) Date of filing: **22.08.2022**

(51) International Patent Classification (IPC):
**H04B 7/185** *(2006.01)* **H04W 4/14** *(2009.01)*

(52) Cooperative Patent Classification (CPC):
**H04B 7/185; H04W 4/14**

(86) International application number:
**PCT/CN2022/113823**

(87) International publication number:
**WO 2023/025075 (02.03.2023 Gazette 2023/09)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.08.2021 CN 202110969792**

(71) Applicant: **Huawei Technologies Co., Ltd.**
**Shenzhen, Guangdong 518129 (CN)**

(72) Inventors:
• **ZHU, Xudong**
  **Shenzhen, Guangdong 518129 (CN)**
• **GAN, Wenyu**
  **Shenzhen, Guangdong 518129 (CN)**
• **QIAN, Feng**
  **Shenzhen, Guangdong 518129 (CN)**
• **YAO, Zhendong**
  **Shenzhen, Guangdong 518129 (CN)**
• **ZHONG, Jilei**
  **Shenzhen, Guangdong 518129 (CN)**
• **QIU, Fengguang**
  **Shenzhen, Guangdong 518129 (CN)**

(74) Representative: **Gill Jennings & Every LLP**
**The Broadgate Tower**
**20 Primrose Street**
**London EC2A 2ES (GB)**

(54) **OUTBOUND DATA TRANSMISSION METHOD AND SYSTEM IN BEIDOU COMMUNICATION SYSTEM, AND RELATED APPARATUS**

(57) This application relates to the field of satellite communication technologies, and discloses an outbound data transmission method in a BeiDou communication system, so that a terminal can add MCS information to an inbound first user frame, and send the inbound first user frame to a BeiDou network device, to indicate the BeiDou network device to encode and modulate, based on the MCS information recommended by the terminal, service data to be sent to the terminal. In this way, the terminal can feed back an outbound MCS to the BeiDou network device without additional signaling overheads, to improve channel utilization.

FIG. 9

## Description

This application claims priority to Chinese Patent Application No. 202110969792.3, filed with the China National Intellectual Property Administration on August 23, 2021 and entitled "OUTBOUND DATA TRANSMISSION METHOD IN BEIDOU COMMUNICATION SYSTEM, SYSTEM, AND RELATED APPARATUS", which is incorporated herein by reference in its entirety.

## TECHNICAL FIELD

This application relates to the field of satellite communication technologies, and in particular, to an outbound data transmission method in a BeiDou communication system, a system, and a related apparatus.

## BACKGROUND

A BeiDou navigation satellite system is an important infrastructure that integrates positioning, timing, and communication. The BeiDou navigation satellite system is especially suitable for performing positioning and communication in an area that mobile communication does not cover or cannot cover, for example, an ocean, a desert, a grassland, or a no-man's land, or an area in which a communication system is damaged. This is a feature different from features of other global positioning and navigation systems such as a global positioning system (global positioning system, GPS) and a global navigation satellite system (global navigation satellite system, GLONASS). A communication system for a BeiDou short packet service upgrades a technical system, to open some necessary resources of the communication system for the BeiDou short packet service to civil use. For civil services and device features, a communication protocol needs to be designed based on a feature of the communication system for the BeiDou short packet service.

In wireless communication, because of different locations of users, different communication time points, and changes of weather conditions, communication link instructions are different. To adapt to different communication links, adaptive modulation and coding scheme (modulation and coding scheme, MCS) order selection needs to be performed for different communication link quality, so as to ensure a high throughput and improve utilization of wireless channel resources. Therefore, during link adaptation, correct evaluation of a channel state is a key factor for ensuring that a selected MCS is correct. The MCS is set at a transmit end, but only a receive end knows a link quality status. Therefore, the transmit end usually needs to send a detection signal to the receive end before sending data, to obtain link state information of the receive end in a correct and timely manner. The receive end performs measurement based on the detection signal to obtain a signal quality status, and feeds back channel state information (channel state information, CSI) to the transmit end. The transmit end sets the MCS to send the data based on received signal quality status information.

However, in the satellite communication system for the BeiDou short packet service, because air interface resources are limited, the MCS at the transmit end cannot be set by measuring the channel quality by using the detection signal.

## SUMMARY

This application provides an outbound data transmission method in a BeiDou communication system, a system, and a related apparatus, so that a terminal can feed back an outbound MCS to a BeiDou network device without additional signaling overheads, to improve channel utilization.

According to a first aspect, this application provides an outbound data transmission method in a BeiDou communication system, including: A first terminal sends a first user frame to a BeiDou network device, where the first user frame carries a first modulation and coding scheme MCS indication field, and the first MCS indication field recommends that the BeiDou network device perform encoding and modulation by using a first MCS when sending a user frame of the first terminal; the first terminal receives first outbound data sent by the BeiDou network device, where the first outbound data includes a first physical frame encoded and modulated on a data channel and pilot information on a pilot channel; and the first terminal obtains, through parsing from the first outbound data based on the first MCS, a second user frame sent by the BeiDou network device to the first terminal.

By using the outbound data transmission method in the BeiDou communication system provided in this embodiment of this application, the first terminal can add MCS information to the inbound first user frame, and send the inbound first user frame to the BeiDou network device, to indicate the BeiDou network device to encode and modulate, based on the MCS information recommended by the terminal, service data to be sent to the first terminal. In this way, the first terminal can feed back an outbound MCS to the BeiDou network device without additional signaling overheads, to improve channel utilization.

In a possible implementation, the first user frame is a data request frame, frame header information of the data request frame includes the first MCS indication field, a value of the first MCS indication field indicates an order of the first MCS, and the data request frame is used to request the BeiDou network device to send service data to the first terminal; and before that a first terminal sends a first user frame to a BeiDou network device, the method further includes: The first terminal receives pilot information sent by the BeiDou network device on the pilot channel, and measuring channel quality of the pilot channel; the first terminal determines channel quality of the data channel based on the channel quality of the pilot channel; and the first terminal determines the first MCS from a mapping relationship between channel quality and an MCS based on the channel quality of the data channel.

In a possible implementation, the data request frame includes a service type field, the service type field indicates a service type of the data request frame, a value of the service type field is a first value or a second value, the first value indicates that the service type of the data request frame is a letterbox profile query service, and the second value indicates that the service type of the data request frame is a letter message download service.

The channel quality of the pilot channel includes a signal-to-noise ratio SNR of the pilot channel, and the channel quality of the data channel includes an SNR of the data channel.

The first terminal determines the SNR of the data channel by using the following formula:

$$SNR_d = SNR_p + \delta$$

$SNR_d$ is the SNR of the data channel, $SNR_p$ is the SNR of the pilot channel, and $\delta$ is a channel quality difference between the data channel and the pilot channel.

In this way, before the first terminal receives the service data delivered by the BeiDou network device, the first terminal needs to actively send the data request frame to the BeiDou network device. The first terminal may determine, by measuring the pilot channel, an MCS used when the BeiDou network device sends the service data to the first terminal. The first terminal may add an MCS indication field to the data request frame, and the MCS indication field may indicate an MCS that the first terminal recommends being used when the BeiDou network device sends the service data to the first terminal. In this way, the first terminal can feed back an outbound MCS to the BeiDou network device without additional signaling overheads, to improve channel utilization.

In a possible implementation, the first user frame is an acknowledgement identifier ACK frame; and before that a first terminal sends a first user frame to a BeiDou network device, the method further includes: The first terminal receives second outbound data sent by the BeiDou network device, where the second outbound data includes a second physical frame encoded and modulated on the data channel and pilot information on the pilot channel; the first terminal obtains a third user frame through decoding from the second physical frame by using a third MCS, and measures channel quality of the data channel; and the first terminal determines the first MCS based on the channel quality of the data channel, where the first user frame indicates that the first terminal has received the third user frame.

In this way, when obtaining, through parsing, the second user frame delivered by the BeiDou network device, the first terminal may determine, by measuring the channel quality of the data channel, the MCS used when the BeiDou network device sends the service data to the first terminal. When returning an ACK to the BeiDou network device, the first terminal may add an MCS indication field to the ACK. The MCS indication field may indicate an MCS used when the first terminal indicates the BeiDou network device to send the service data to the first terminal. In this way, the first terminal can feed back an outbound MCS to the BeiDou network device without additional signaling overheads, to improve channel utilization.

In a possible implementation, frame header information of the first user frame includes the first MCS indication field, and a value of the first MCS indication field indicates an order of the first MCS, or a value of the first MCS indication field indicates an order comparison result of the first MCS and the third MCS.

In a possible implementation, an ACK field of the ACK frame includes the first MCS indication field, where a value of the first MCS indication field indicates an order of the first MCS and whether the first terminal receives the second user frame sent by the BeiDou network device; or a value of the first MCS indication field indicates an order comparison result of the first MCS and the second MCS and whether the first terminal receives the second user frame sent by the BeiDou network device. In this way, the ACK field may be reused as an MCS indication field, to reduce overheads of a frame header.

In a possible implementation, after that the first terminal obtains, through parsing from the first outbound data based on the first MCS, a second user frame sent by the BeiDou network device to the first terminal, the method further includes: the first terminal sends a first ACK, where the first ACK indicates that the first terminal has received the second user frame sent by the BeiDou network device, the first ACK includes a second MCS indication field, and the second MCS indication field recommends that the BeiDou network device perform encoding and modulation by using a fourth MCS when sending the user frame of the first terminal; the first terminal receives third outbound data sent by the BeiDou network device, where the third outbound data includes a third physical frame encoded and modulated on the data channel and pilot information on the pilot channel; and the first terminal obtains, through parsing from the third outbound data based on the fourth MCS, a fourth user frame sent by the BeiDou network device to the first terminal.

According to a second aspect, this application provides another outbound data transmission method in a BeiDou communication system, including: A BeiDou network device receives a first user frame sent by a first terminal, where the first user frame carries a first MCS indication field, and the first MCS indication field recommends that the BeiDou network device perform encoding and modulation by using a first MCS when sending a user frame of the first terminal; the BeiDou network device adds a second user frame to be sent to the first terminal to a first physical frame, and encodes and modulates the first physical frame by using the first MCS; and the BeiDou network device sends first outbound data, where the first outbound data includes a first physical frame encoded and modulated on a data channel and pilot information on a pilot channel.

By using the outbound data transmission method in the BeiDou communication system provided in this embodiment of this application, the first terminal can add MCS information to the inbound first user frame, and send the inbound first user frame to the BeiDou network device, to indicate the BeiDou network device to encode and modulate, based on the MCS information recommended by the terminal, service data to be sent to the first terminal. In this way, the first terminal can feed back an outbound MCS to the BeiDou network device without additional signaling overheads, to improve channel utilization.

In a possible implementation, the first user frame is a data request frame, frame header information of the data request frame includes the first MCS indication field, a value of the first MCS indication field indicates an order of the first MCS, and the data request frame is used to request the BeiDou network device to send service data to the first terminal; and after that a BeiDou network device receives a first user frame sent by a first terminal, the method further includes: the BeiDou network device generates a first application layer packet in response to the data request frame; and the BeiDou network device splits the first application layer packet into one or more user frames, where the one or more user frames include the second user frame.

In a possible implementation, the data request frame includes a service type field, the service type field indicates a service type of the data request frame, a value of the service type field is a first value, and the first value indicates that the service type of the data request frame is a letterbox profile query service; and that the BeiDou network device generates a first application layer packet in response to the data request frame specifically includes: The BeiDou network device generates the first application layer packet based on letterbox profile information of the first terminal in response to the data request frame, where the letterbox profile information of the first terminal includes one or more of a quantity of to-be-downloaded letter messages of the first terminal, sending time, and a sender identifier.

In a possible implementation, the data request frame includes a service type field, the service type field indicates a service type of the data request frame, a value of the service type field is a second value, and the second value indicates that the service type of the data request frame is a letter message download service; and that the BeiDou network device generates a first application layer packet in response to the data request frame specifically includes: The BeiDou network device obtains a first letter message through querying from a letterbox of the first terminal in response to the data request frame, and generates the first application layer packet based on the first letter message.

In this way, before the first terminal receives the service data delivered by the BeiDou network device, the first terminal needs to actively send the data request frame to the BeiDou network device. The first terminal may determine, by measuring the pilot channel, an MCS used when the BeiDou network device sends the service data to the first terminal. The first terminal may add an MCS indication field to the data request frame, and the MCS indication field may indicate an MCS that the first terminal recommends being used when the BeiDou network device sends the service data to the first terminal. In this way, the first terminal can feed back an outbound MCS to the BeiDou network device without additional signaling overheads, to improve channel utilization.

In a possible implementation, the first user frame is an ACK frame; and before that a BeiDou network device receives a first user frame sent by a first terminal, the method further includes: The BeiDou network device adds a third user frame to be sent to the first terminal to a second physical frame, and encodes and modulates the second physical frame by using a third MCS, where second outbound data includes a second physical frame encoded and modulated on the data channel by using the third MCS and pilot information on the pilot channel, and the first user frame indicates that the first terminal has received the third user frame.

In this way, when obtaining, through parsing, the second user frame delivered by the BeiDou network device, the first terminal may determine, by measuring the channel quality of the data channel, the MCS used when the BeiDou network device sends the service data to the first terminal. When returning an ACK to the BeiDou network device, the first terminal may add an MCS indication field to the ACK. The MCS indication field may indicate an MCS used when the first terminal indicates the BeiDou network device to send the service data to the first terminal. In this way, the first terminal can feed back an outbound MCS to the BeiDou network device without additional signaling overheads, to improve channel utilization.

In a possible implementation, frame header information of the first user frame includes the first MCS indication field, and a value of the first MCS indication field indicates an order of the first MCS, or a value of the first MCS indication field indicates an order comparison result of the first MCS and the third MCS.

In a possible implementation, an ACK domain of the ACK frame includes the first MCS indication field, where a value of the first MCS indication field indicates an order of the first MCS and whether the first terminal receives the second user frame sent by the BeiDou network device; or a value of the first MCS indication field indicates an order comparison result of the first MCS and the second MCS and whether the first terminal receives the second user frame sent by the BeiDou network device.

In a possible implementation, after that the BeiDou network device sends first outbound data, the method further includes: The BeiDou network device receives a firstACK sent by the first terminal, where the first ACK indicates that the first terminal has received the second user frame sent by the BeiDou network device, the first ACK includes a second MCS indication field, and the second MCS indication field recommends that the BeiDou network device perform encoding and modulation by using a fourth MCS when sending the user frame of the first terminal; the BeiDou network device adds a fourth user frame to be sent to the first terminal to a third physical frame, and encodes and modulates the third physical frame by using the fourth MCS; and the BeiDou network device sends third outbound data, where the third outbound data includes a fourth physical frame encoded and modulated on the data channel and pilot information on the pilot channel.

In a possible implementation, before that a BeiDou network device receives a first user frame sent by a first terminal, the method further includes: The BeiDou network device receives a fifth user frame sent by a second terminal, where the fifth user frame recommends that the BeiDou network device perform encoding and modulation by using a fifth MCS when sending a user frame of the second terminal; and that the BeiDou network device adds a second user frame to be sent to the first terminal to a first physical frame, and encodes and modulates the first physical frame by using the first MCS specifically includes: The BeiDou network device adds the second user frame to be sent to the first terminal and the fifth user frame to be sent to the second terminal to the first physical frame, and encodes and modulates the first physical frame by using the first MCS.

In a possible implementation, an order of the first MCS is less than an order of the fifth MCS.

In a possible implementation, an order of the first MCS is equal to an order of the fifth MCS.

In a possible implementation, an order of the first MCS is greater than an order of the fifth MCS.

According to a third aspect, this application provides another outbound data transmission method in a BeiDou communication system, including: A BeiDou network device receives a first user frame sent by a first terminal on an inbound channel; the BeiDou network device measures channel quality of the inbound channel when receiving the first user frame; the BeiDou network device determines channel quality of a data channel based on the channel quality of the inbound channel; the BeiDou network device determines an outbound MCS from a mapping relationship between channel quality and an MCS based on the channel quality of the data channel; the BeiDou network device adds a second user frame to be sent to the first terminal to a first physical frame, and encodes and modulates the first physical frame by using the outbound MCS; and the BeiDou network device sends first outbound data, where the first outbound data includes the first physical frame encoded and modulated on the data channel and pilot information on a pilot channel.

According to the outbound data transmission method in the BeiDou communication system provided in this application, the BeiDou network device can measure channel quality of an inbound channel based on the data request frame sent by the first terminal, to obtain channel quality of an outbound data channel through conversion. The BeiDou network device may determine an outbound MCS based on the channel quality of the data channel. In this way, the BeiDou network device may select the outbound MCS without additional signaling overheads, to improve channel utilization.

According to a fourth aspect, this application provides a BeiDou communication system, including a first terminal and a BeiDou network device. The first terminal may perform the method in any possible implementation of the first aspect. The BeiDou network device may perform the method in any possible implementation of the first aspect.

According to a fifth aspect, this application provides a communication apparatus, including one or more processors, one or more memories, and a transceiver. The transceiver and the one or more memories are coupled to the one or more processors, the one or more memories are configured to store computer program code, the computer program code includes computer instructions, and when the one or more processors execute the computer instructions, the communication apparatus is enabled to perform the method in any possible implementation of the first aspect.

The communication apparatus may be a terminal or a device in another product form.

According to a sixth aspect, this application provides a communication apparatus, including one or more processors, one or more memories, and a transceiver. The transceiver and the one or more memories are coupled to the one or more processors, the one or more memories are configured to store computer program code, the computer program code includes computer instructions, and when the one or more processors execute the computer instructions, the communication apparatus is enabled to perform the method in any possible implementation of the second aspect.

The communication apparatus may be a BeiDou network device, or any network element or a combination of a plurality of network elements in the BeiDou network device.

According to a seventh aspect, this application provides a computer storage medium, including computer instructions. When the computer instructions are run on a computer, the computer is enabled to perform the method in any possible implementation of the first aspect.

According to an eighth aspect, this application provides a computer storage medium, including computer instructions. When the computer instructions are run on a computer, the computer is enabled to perform the method in any possible implementation of the second aspect.

According to a ninth aspect, this application provides a computer program product. When the computer program product runs on a computer, the computer is enabled to perform the method in any possible implementation of the first aspect.

According to a tenth aspect, this application provides a computer program product. When the computer program product runs on a computer, the computer is enabled to perform the method in any possible implementation of the second aspect.

According to an eleventh aspect, this application provides a chip or a chip system, applied to a terminal, and including a processing circuit and an interface circuit, where the interface circuit is configured to receive code instructions and transmit the code instructions to the processing circuit, and the processing circuit is configured to run the code instructions to perform the method in any possible implementation of the first aspect.

## BRIEF DESCRIPTION OF DRAWINGS

FIG. 1 is a schematic diagram of an architecture of a BeiDou communication system according to an embodiment of this application;

FIG. 2A is a schematic diagram of an inbound data transmission process in a BeiDou communication system according to an embodiment of this application;

FIG. 2B is a schematic diagram of an outbound data transmission process in a BeiDou communication system according to an embodiment of this application;

FIG. 3 is a schematic diagram of a curve of an SNR and a throughput according to an embodiment of this application;

FIG. 4 is a schematic flowchart of an MCS selection mode according to an embodiment of this application;

FIG. 5 is a schematic flowchart of an MCS selection mode in a cellular network according to an embodiment of this application;

FIG. 6 is a schematic diagram of a structure of a terminal according to an embodiment of this application;

FIG. 7A, FIG. 7B, and FIG. 7C are a schematic diagram of a protocol encapsulation architecture of outbound data in a BeiDou communication system according to an embodiment of this application;

FIG. 8A, FIG. 8B, and FIG. 8C are a schematic diagram of a protocol parsing architecture of outbound data in a BeiDou communication system according to an embodiment of this application;

FIG. 9 is a schematic flowchart of an outbound data transmission method in a BeiDou communication system according to an embodiment of this application;

FIG. 10A is a schematic diagram of a frame format of a data request frame according to an embodiment of this application;

FIG. 10B is a schematic diagram of user frame scheduling according to an embodiment of this application;

FIG. 11 is a schematic flowchart of another outbound data transmission method in a BeiDou communication system according to an embodiment of this application;

FIG. 12A is a schematic diagram of a frame format of an ACK frame according to an embodiment of this application;

FIG. 12B is a schematic diagram of a frame format of another ACK frame according to an embodiment of this application;

FIG. 13 is a schematic flowchart of another outbound data transmission method in a BeiDou communication system according to an embodiment of this application;

FIG. 14 is a schematic diagram of a frame format of another data request frame according to an embodiment of this application;

FIG. 15 is a schematic diagram of a structure of a communication apparatus according to an embodiment of this application;

FIG. 16 is a schematic diagram of a structure of another communication apparatus according to an embodiment of this application;

FIG. 17 is a schematic diagram of a structure of another communication apparatus according to an embodiment of this application; and

FIG. 18 is a schematic diagram of a structure of another communication apparatus according to an embodiment of this application.

**DESCRIPTION OF EMBODIMENTS**

The following clearly and thoroughly describes technical solutions in embodiments of this application with reference to the accompanying drawings. In descriptions of embodiments of this application, unless otherwise stated, "/" indicates "or". For example, A/B may indicate A or B. The term "and/or" in this specification merely describes an association relationship for describing associated objects, and indicates that three relationships may exist. For example, A and/or B may indicate the following three cases: Only A exists, both A and B exist, and only B exists. In addition, in descriptions of embodiments of this application, "a plurality of" means two or more.

The following terms "first" and "second" are merely intended for a purpose of description, and shall not be understood as an indication or implication of relative importance or implicit indication of a quantity of indicated technical features. Therefore, a feature limited to "first" and "second" may explicitly or implicitly include one or more features. In descriptions of embodiments of this application, unless otherwise specified, "a plurality of" means two or more.

**The following describes a BeiDou communication system 10 provided in embodiments of this application.**

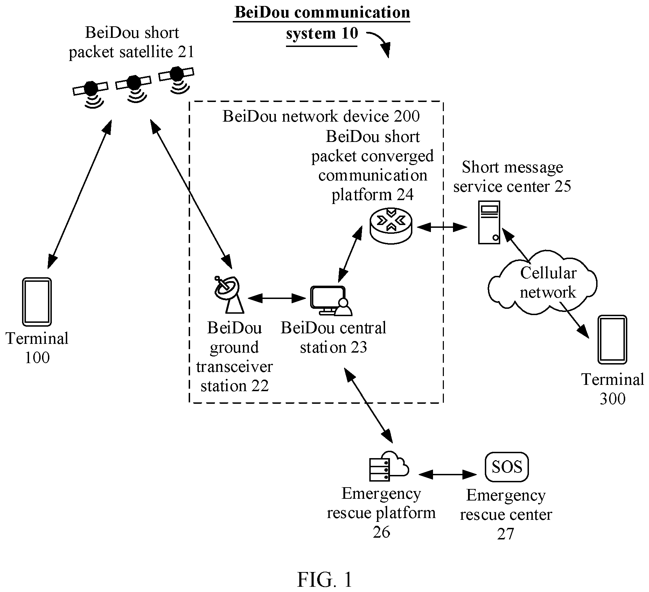

FIG. 1 is a schematic diagram of an architecture of a BeiDou communication system 10 according to an embodiment of this application.

As shown in FIG. 1, the BeiDou communication system 10 may include a terminal 100, a BeiDou short packet satellite 21, a BeiDou network device 200, a short message service center 25, and a terminal 300. Optionally, the BeiDou communication system 10 may further include an emergency rescue platform 26 and an emergency rescue center 27.

The terminal 100 may send short packet information to the BeiDou short packet satellite 21, and the BeiDou short packet satellite 21 performs only relay, and directly forwards the short packet information sent by the terminal 100 to the BeiDou network device 200 on the ground. The BeiDou network device 200 may parse, according to the BeiDou communication protocol, the short packet information forwarded by the satellite, and forward, to the short message service center (short message service center, SMSC) 25, packet content of a general packet type that is obtained through parsing from the short packet information. The short message service center 25 may forward the packet content to the terminal 300 through a conventional cellular communication network. The BeiDou network device 200 may also send, to the emergency rescue center 27 through the emergency rescue platform 26, a packet of an emergency rescue type sent by the terminal 100.

The terminal 300 may also send a short message to the short message service center 25 through a conventional cellular communication network. The short message service center 25 may forward the short message of the terminal 300 to the BeiDou network device 200. The BeiDou network device 200 may send the short message of the terminal 300 to the terminal 100 through relay of the BeiDou short packet satellite 21.

The BeiDou network device 200 may include a BeiDou ground transceiver station 22, a BeiDou central station 23, and a BeiDou short packet converged communication platform 24. The BeiDou ground transceiver station 22 may include one or more devices having a sending function and one or more devices having a receiving function, or may include one or more devices having a sending function and a receiving function. This is not limited herein. The BeiDou ground transceiver station 22 may be configured to perform a data processing function of the BeiDou network device 200 at a physical (physical layer protocol, PHY) layer. The BeiDou central station 23 may be configured to perform a data processing function of the BeiDou network device 200 at a satellite link (satellite link control protocol, SLC) layer and a message convergence (message data convergence protocol, MDCP) layer. The BeiDou short packet converged communication platform 24 may be configured to perform a data processing function at an application (application layer protocol, APP) layer.

Because the BeiDou communication system 10 performs communication by using a satellite link, a main feature of the BeiDou communication system 10 is: a delay is long (about 270 ms in one direction), and a link loss is large. Currently, a service supported by the BeiDou communication system 10 is mainly a burst short message service, and does not support connection status management, mobility management, broadcast control information, and the like.

The terminal 100 may actively send data to the BeiDou network device 200 through the BeiDou short packet satellite 21. However, because there is no air interface signaling, a ground central station cannot actively page a user. Because satellite communication has a long propagation distance, the BeiDou communication system 10 has a high requirement on a transmit power of the terminal 100. Due to a limitation of a radio frequency component on the current terminal 100, the terminal 100 cannot continuously send a signal to the BeiDou short packet satellite 21 for a long time. To avoid damaging the radio frequency component on the terminal 100 as much as possible, after continuously working in a sending state for a period of time, the radio frequency component on the terminal 100 needs to stop working for a period of time before continuing to switch to the sending state to continue working. Duration of the sending state of the terminal 100 is determined based on a bottom-layer hardware capability of the terminal 100. In the BeiDou communication system 10, to ensure that data received by the terminal 100 and data sent by the terminal 100 do not interfere with each other, the terminal 100 does not support simultaneous sending of the data and receiving of the data. After sending the data, the terminal 100 needs to wait to receive the data sent by the BeiDou network device 200.

A working mode of the BeiDou network device 200 may be a duplex mode, so that the BeiDou network device 200 may receive the data and send the data simultaneously. In addition, the BeiDou network device 200 may receive the data and send the data for a long time.

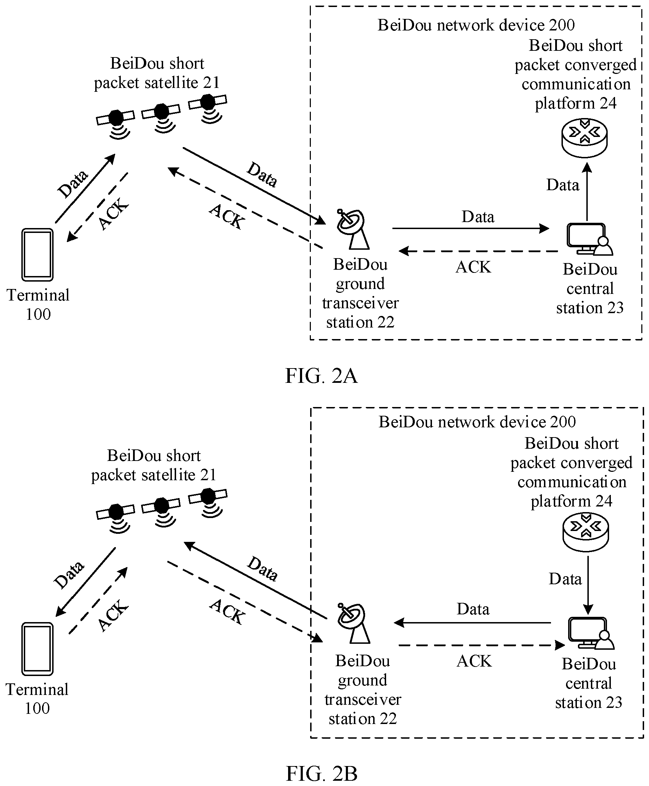

**FIG. 2A shows an inbound data transmission process in a BeiDou communication system according to an embodiment of this application.**

As shown in FIG. 2A, data inbound may mean that the terminal 100 sends data to the BeiDou network device 200. For example, the terminal 100 may send a data frame to the BeiDou ground transceiver station 22. The BeiDou ground transceiver station 22 may send the data frame to the BeiDou central station 23. The BeiDou central station 23 may converge data frames into an application layer packet and report the application layer packet to the BeiDou short packet converged communication platform 24. After receiving the data frame sent by the terminal 100, the BeiDou central station 23 may return an SLC-layer acknowledgment character (acknowledge character, ACK) to the terminal 100. The ACK may indicate whether the BeiDou network device 200 successfully receives the data frame sent by the terminal 100.

**FIG. 2B shows an outbound data transmission process in a BeiDou communication system according to an embodiment of this application.**

As shown in FIG. 2B, data outbound may mean that the BeiDou network device 200 sends data to the terminal 100. For example, the BeiDou short packet converged communication platform 24 in the BeiDou network device 200 may send an application layer packet to the BeiDou central station 23. Then, the BeiDou central station 23 may split the application layer packet into one or more data frames and send the one or more data frames to the BeiDou ground transceiver station 22, and the BeiDou short packet satellite 21 relays the data frames and sends the data frames to the terminal 100. After receiving the data frame, the terminal 100 may return an SLC-layer ACK to the BeiDou central station 23. The ACK may indicate whether the terminal 100 successfully receives the data frame sent by the BeiDou network device 200.

**The following describes encoding and modulation in embodiments of this application.**

To resist a bad environment of signal transmission on a wireless channel, a transmit end needs to convert a to-be-sent signal into a form suitable for transmission on a specific channel, that is, encoding and modulation. Usually, the encoding and modulation mean that a transmit end adds a redundant bit to a to-be-sent information number, to resist a transmission failure caused by channel quality deterioration. When channel quality is good, a quantity of redundant bits can be reduced to increase a proportion of valid information, and then increase a transmission throughput. On the contrary, overheads of redundant bits need to be increased to ensure that communication information can be transmitted at a low rate. The channel quality may be measured by using a signal-to-noise ratio (signal-to-noise ratio, SNR) of a channel.

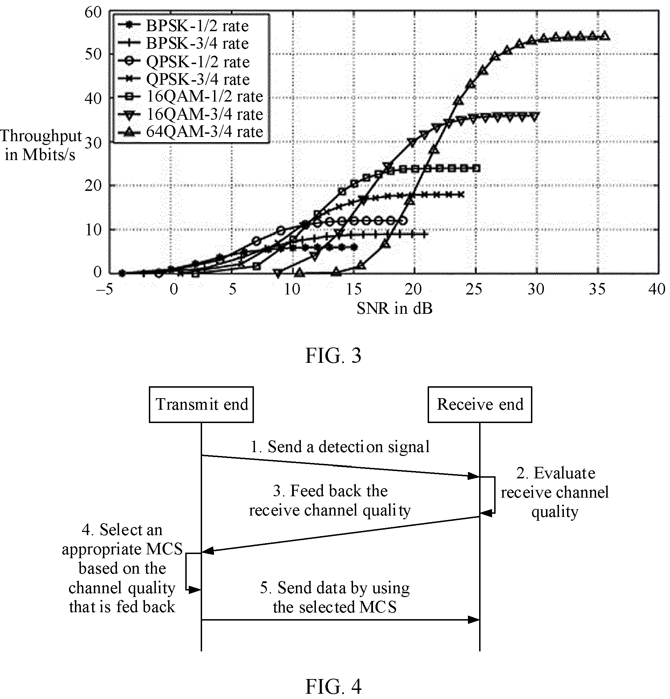

FIG. 3 is a schematic diagram of a curve of an SNR and a throughput according to an embodiment of this application.

As shown in FIG. 3, different SNRs have an optimal MCS selection. Therefore, how to select an MCS is a key factor for improving a channel transmission throughput during wireless transmission. A modulation scheme in the MCS may include binary phase shift keying (binary phase shift keying, BPSK), quadrature phase shift keying (quadrature phase shift keying, QPSK), 16 quadrature amplitude modulation (quadrature amplitude modulation, QAM), 64QAM, and the like. A coding rate (rate) in the MCS may include a coding rate of 1/2, 3/4, or the like.

For example, when the SNR is greater than 25 dB (dB), the transmission throughput of the channel is the highest when an MCS of 64QAM and 3/4 rate is selected. When the SNR is 20 dB, the transmission throughput of the channel is the highest when an MCS of 16QAM and 3/4 rate is selected. The foregoing example is merely used to explain this application, and should not constitute a limitation.

The following describes an MCS selection mode provided in embodiments of this application.

FIG. 4 is a schematic flowchart of an MCS selection mode according to an embodiment of this application.

In wireless communication, because of different locations of users, different communication time points, and changes of weather conditions, communication link instructions are different. To adapt to different communication links, adaptive modulation and coding scheme (modulation and coding scheme, MCS) order selection needs to be performed for different communication link quality, so as to ensure a high throughput and improve utilization of wireless channel resources. Therefore, during link adaptation, correct evaluation of a channel state is a key factor for ensuring that a selected MCS is correct. The MCS is set at a transmit end, and only a receive end knows a link quality status.

Therefore, as shown in FIG. 4, an MCS selection mode may usually include the following steps.

1. The transmit end sends a detection signal to the receive end.
2. The receive end evaluates quality of a receive channel based on the received detection signal.
3. The receive end feeds back the quality of the receive channel to the transmit end.
4. The transmit end selects an appropriate MCS based on the quality of the channel.
5. The transmit end sends data based on the selected MCS.

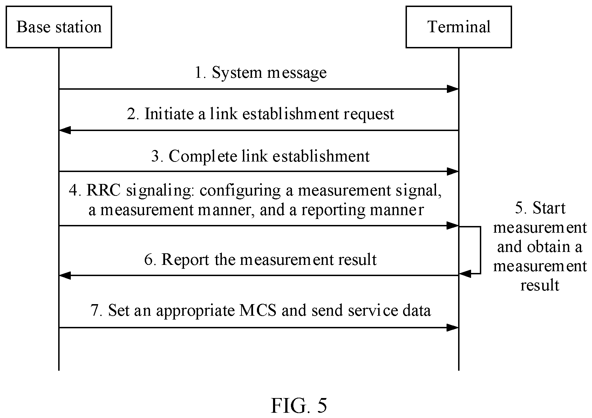

FIG. 5 is a schematic flowchart of an MCS selection mode in a cellular network.

As shown in FIG. 5, in the cellular network like LTE and 5G-NR, an MCS may be selected by using the following steps.

1. A base station sends a system message to a terminal.
2. After receiving the system message, the terminal initiates a link establishment request to the base station.
3. After receiving the link establishment request, the base station establishes a complete link to the terminal.
4. The base station sends RRC signaling to the terminal, where the RRC signaling is used to configure a measurement signal, a measurement manner, and a reporting manner of the terminal.
5. After receiving the RRC signaling, the terminal completes configuration of the measurement signal, the measurement manner, and the reporting manner, starts channel measurement, and obtains a measurement result.
6. The terminal reports the measurement result to the base station.
7. Based on the measurement result, the base station sets an appropriate MCS and sends service data.

It can be seen from the foregoing MCS selection mode that, before sending data, the base station needs to perform signaling interaction with the terminal, to complete MCS selection. However, in a long-distance communication link of satellite communication, a transmission delay of a channel is relatively long, and air interface resources are limited. Frequent interaction between a terminal and a network side causes an excessively long data transmission delay, and occupies a relatively large quantity of air interface resources. The foregoing MCS selection mode is not applicable to a satellite communication system such as a BeiDou communication system.

Therefore, embodiments of this application provide an outbound data transmission method in a BeiDou communication system, so that the terminal 100 can add MCS information to an inbound first user frame (including a data request frame or an ACK frame), and send the inbound first user frame to the BeiDou network device 200, to indicate the BeiDou network device 200 to encode and modulate, based on the MCS information indicated by the terminal 100, service data to be sent to the terminal 100. In this way, the terminal 100 can feed back an outbound MCS to the BeiDou network device 200 without additional signaling overheads, to improve channel utilization.

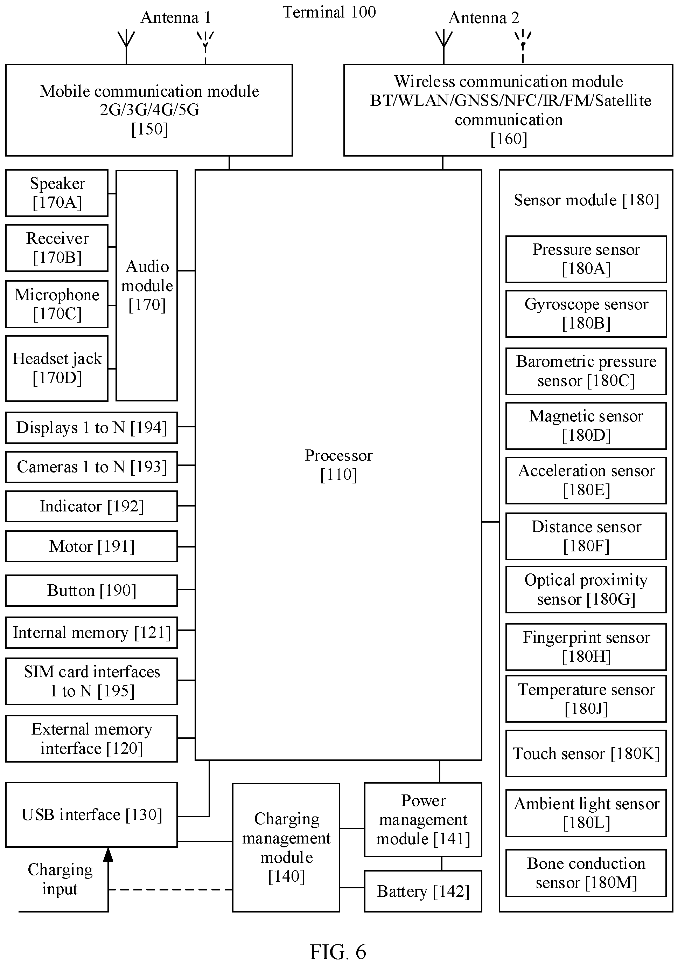

**FIG. 6 is a schematic diagram of a structure of the terminal 100.**

The terminal 100 is used as an example below to describe embodiments in detail. It should be understood that the terminal 100 shown in FIG. 6 is merely an example. In addition, the terminal 100 may have more or fewer components than those shown in FIG. 6, or may combine two or more components, or may have different component configurations. Various components shown in FIG. 6 may be implemented by hardware that includes one or more signal processing and/or application-specific integrated circuits, software, or a combination of hardware and software.

The terminal 100 may include a processor 110, an external memory interface 120, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identity module, SIM) card interface 195, and the like. The sensor module 180 may include a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure illustrated in this embodiment of the present invention does not constitute a specific limitation on the terminal 100. In some other embodiments of this application, the terminal 100 may include more or fewer components than those shown in the figure, or combine some components, or split some components, or have a different component arrangement. The components shown in figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the terminal 100. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data just used or cyclically used by the processor 110. If the processor 110 needs to use the instructions or the data again, the processor may directly invoke the instructions or the data from the memory. This avoids repeated access and reduces waiting time of the processor 110, thereby improving system efficiency.

In some embodiments, the processor 110 may include one or more interfaces. The interfaces may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identity module (subscriber identity module, SIM) interface, a universal serial bus (universal serial bus, USB) interface, and/or the like.

The I2C interface is a two-way synchronous serial bus, including a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash light, the camera 193, and the like through different I2C bus interfaces. For example, the processor 110 may be coupled to the touch sensor 180K through an I2C interface, so that the processor 110 communicates with the touch sensor 180K through the I2C bus interface, to implement a touch function of the terminal 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call by using a Bluetooth headset.

The PCM interface may also be configured to: perform audio communication, and sample, quantize, and encode an analog signal. In some embodiments, the audio module 170 may be coupled to the wireless communication module 160 through the PCM bus interface. In some embodiments, the audio module 170 may also transmit an audio signal to the wireless communication module 160 through the PCM interface, to implement a function of answering a call by using a Bluetooth headset. Both the I2S interface and the PCM interface may be configured to perform the audio communication.

The UART interface is a universal serial data bus, and is used for asynchronous communication. The bus may be a bidirectional communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through the Bluetooth headset.

The MIPI interface may be configured to connect the processor 110 to a peripheral device such as the display 194 or the camera 193. The MIPI interface includes a camera serial interface (camera serial interface, CSI), a display serial interface (display serial interface, DSI), and the like. In some embodiments, the processor 110 and the camera 193 communicate through the CSI interface, to implement a photographing function of the terminal 100. The processor 110 and the display 194 communicate through the DSI interface, to implement a display function of the terminal 100.

The GPIO interface may be configured through software. The GPIO interface may be configured for control signals or data signals. In some embodiments, the GPIO interface may be configured to connect the processor 110 to the camera 193, the display 194, the wireless communication module 160, the audio module 170, the sensor module 180, and the like. The GPIO interface may be alternatively configured as an I2C interface, an I2S interface, a UART interface, an MIPI interface, or the like.

The USB interface 130 is an interface that conforms to a USB standard specification, and may be specifically a mini USB interface, a micro USB interface, a USB type-C interface, or the like. The USB interface 130 may be configured to connect to a charger to charge the terminal 100, or may be configured to exchange data between the terminal 100 and a peripheral device, or may be configured to connect to a headset, to play audio through the headset. The interface may be further configured to connect to another electronic device like an AR device.

It may be understood that an interface connection relationship between the modules shown in this embodiment of the present invention is merely an example for description, and does not constitute a limitation on the structure of the terminal 100. In some other embodiments of this application, the terminal 100 may alternatively use an interface connection manner different from that in the foregoing embodiment, or a combination of a plurality of interface connection manners.

The charging management module 140 is configured to receive charging input from the charger. The charger may be a wireless charger or a wired charger. In some embodiments of wired charging, the charging management module 140 may receive charging input of the wired charger through the USB interface 130. In some embodiments of wireless charging, the charging management module 140 may receive a wireless charging input through a wireless charging coil of the terminal 100. The charging management module 140 may further supply power to an electronic device through the power management module 141 while charging the battery 142.

The power management module 141 is configured to connect to the battery 142, the charging management module 140, and the processor 110. The power management module 141 receives an input of the battery 142 and/or the charging management module 140, and supplies power to the processor 110, the internal memory 121, the external memory, the display 194, the camera 193, the wireless communication module 160, and the like. The power management module 141 may be further configured to monitor parameters such as a battery capacity, a battery cycle quantity, and a battery health status (electric leakage and impedance). In some other embodiments, the power management module 141 may be further disposed in the processor 110. In some other embodiments, the power management module 141 and the charging management module 140 may be alternatively disposed in a same component.

A wireless communication function of the terminal 100 may be implemented by using the antenna 1, the antenna 2, the mobile communication module 150, the wireless communication module 160, the modem processor, the baseband processor, and the like.

The antenna 1 and the antenna 2 are configured to transmit and receive an electromagnetic wave signal. Each antenna in the terminal 100 may be configured to cover a single communication band or a plurality of communication bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a wireless communication solution applied to the terminal 100 and including 2G/3G/4G/5G or the like. The mobile communication module 150 may include at least one filter, a switch, a power amplifier, a low noise amplifier (low noise amplifier, LNA), and the like. The mobile communication module 150 may receive an electromagnetic wave by using the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert the signal into an electromagnetic wave for radiation by using the antenna 1. In some embodiments, at least some functional modules in the mobile communication module 150 may be disposed in the processor 110. In some embodiments, at least some functional modules of the mobile communication module 150 may be disposed in a same component with at least some modules of the processor 110.

The modem processor may include a modulator and a demodulator. The modulator is configured to modulate a to-be-sent low-frequency baseband signal into a medium or highfrequency signal. The demodulator is configured to demodulate a received electromagnetic wave signal into a low-frequency baseband signal. Then the demodulator transmits the low-frequency baseband signal obtained through demodulation to the baseband processor for processing. The low-frequency baseband signal is processed by the baseband processor, and then transferred to the application processor. The application processor outputs a sound signal by an audio device (which is not limited to the speaker 170A, the receiver 170B, or the like), or displays an image or a video by the display 194. In some embodiments, the modem processor may be an independent component. In some other embodiments, the modem processor may be independent of the processor 110, and is disposed in the same device with the mobile communication module 150 or another functional module.

The wireless communication module 160 may provide a wireless communication solution that is applied to the terminal 100 and that includes a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), a satellite communication module, frequency modulation (frequency modulation, FM), a near field communication (near field communication, NFC) technology, an infrared (infrared, IR) technology, or the like. The wireless communication module 160 may be one or more devices integrating at least one communication processing module. The wireless communication module 160 receives an electromagnetic wave by using the antenna 2, performs frequency modulation and filtering on an electromagnetic wave signal, and sends a processed signal to the processor 110. The wireless communication module 160 may further receive a to-be-sent signal from the processor 110, perform frequency modulation and amplification on the signal, and convert the signal into an electromagnetic wave for radiation by using the antenna 2.

The satellite communication module may be configured to communicate with a satellite network device. For example, in a BeiDou communication system, the satellite communication module may communicate with the BeiDou network device 200, and the satellite communication module may support short packet transmission between the satellite communication module and the BeiDou network device 200.

In some embodiments, the antenna 1 and the mobile communication module 150 of the terminal 100 are coupled, and the antenna 2 and the wireless communication module 160 are coupled, so that the terminal 100 can communicate with a network and another device by using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-CDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The terminal 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, which execute program instructions to generate or change display information.

The display 194 is configured to display an image, a video, or the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the terminal 100 may include one or N displays 194, where N is a positive integer greater than 1.

The terminal 100 may implement a photographing function by using the ISP, the camera 193, the video codec, the GPU, the display 194, the application processor, and the like.

The ISP may be configured to process data fed back by the camera 193. For example, during photographing, a shutter is pressed, a ray of light is transmitted to a photosensitive element of the camera through a lens, and an optical signal is converted into an electrical signal. The photosensitive element of the camera transmits the electrical signal to the ISP for processing, to convert the electrical signal into a visible image. The ISP may further perform algorithm optimization on noise, and brightness of the image. The ISP may further optimize parameters such as exposure to a shooting scenario and color temperature. In some embodiments, the ISP may be disposed in the camera 193.

The camera 193 is configured to capture a static image or a video. An optical image of an object is generated through the lens, and is projected to the photosensitive element. The photosensitive element may be a charge coupled device (charge coupled device, CCD) or a complementary metal-oxide-semiconductor (complementary metal-oxide-semiconductor, CMOS) phototransistor. The light-sensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal of a standard format such as RGB or YUV. In some embodiments, the terminal 100 may include one or N cameras 193, where N is a positive integer greater than 1.

The digital signal processor is configured to process a digital signal. In addition to the digital image signal, the digital signal processor may further process another digital signal. For example, when the terminal 100 performs frequency channel selection, the digital signal processor is configured to perform Fourier transformation and the like on frequency channel energy.

The video codec is configured to compress or decompress a digital video. The terminal 100 may support one or more types of video codecs. In this way, the terminal 100 can play or record videos in a plurality of encoding formats, for example, the moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a transfer mode between human brain neurons, and may further continuously perform self-learning. The NPU may be used for implementing applications such as intelligent cognition of the terminal 100, for example, image recognition, facial recognition, speech recognition, and text understanding.

The external memory interface 120 may be configured to connect to an external memory card, for example, a micro SD card, to extend a storage capacity of the terminal 100. The external memory card communicates with the processor 110 through the external memory interface 120, to implement a data storage function. For example, files such as music and videos are stored in the external memory card.

The internal memory 121 may be configured to store computer-executable program code, and the executable program code includes instructions. The processor 110 runs the instructions stored in the internal memory 121, to implement various function applications and data processing of the terminal 100. The internal memory 121 may include a program storage area and a data storage area. The program storage area may store an operating system, an application required by at least one function (for example, a voice playing function or an image playing function), and the like. The data storage area may store data (such as audio data and a phone book) created during use of the terminal 100, or the like. In addition, the internal memory 121 may include a high-speed random access memory, and may further include a nonvolatile memory, for example, at least one magnetic disk storage device, a flash memory device, or a universal flash storage (universal flash storage, UFS).

The terminal 100 may implement an audio function, for example, music playing and recording, by using the audio module 170, the speaker 170A, the receiver 170B, the microphone 170C, the headset jack 170D, the application processor, and the like.

The audio module 170 is configured to convert digital audio information into an analog audio signal output, and is further configured to convert an analog audio input into a digital audio signal. The audio module 170 may be further configured to code and decode audio signals. In some embodiments, the audio module 170 may be disposed in the processor 110, or some functional modules of the audio module 170 may be disposed in the processor 110.

The speaker 170A, also referred to as a "loudspeaker", is configured to convert an audio electrical signal into a sound signal. The terminal 100 may be configured to listen to music or listen to a hands-free call by using the loudspeaker 170A.

The receiver 170B, also referred to as an "earpiece", is configured to convert an electrical audio signal into a sound signal. When a call is answered or speech information is listened to by using the terminal 100, the receiver 170B may be put close to a human ear to listen to voice.

The microphone 170C, also referred to as a "mike" or a "mic", is configured to convert a sound signal into an electrical signal. When making a call or sending speech information, a user may place the mouth of the user near the microphone 170C to make a sound, to input a sound signal to the microphone 170C. The terminal 100 may have at least one microphone 170C. In some other embodiments, the terminal 100 may have two microphones 170C, to collect a sound signal and further implement a noise reduction function. In some other embodiments, the terminal 100 may alternatively have three, four, or more microphones 170C, to collect a sound signal, reduce noise, identify a sound source, implement a directional recording function, and the like.

The headset jack 170D is configured to connect to a wired headset. The headset jack 170D may be the USB interface 130, or may be a 3.5 mm open mobile electronic device platform (open mobile terminal platform, OMTP) standard interface, or a cellular telecommunications industry association of the USA (cellular telecommunications industry association of the USA, CTIA) standard interface.

The pressure sensor 180A is configured to sense a pressure signal, and can convert the pressure signal into an electrical signal. In some embodiments, the pressure sensor 180A may be disposed on the display 194. There are a plurality of types of pressure sensors 180A such as a resistive pressure sensor, an inductive pressure sensor, and a capacitive pressure sensor. The capacitive pressure sensor may include at least two parallel plates made of conductive materials. When a force is applied to the pressure sensor 180A, capacitance between electrodes changes. The terminal 100 determines pressure intensity based on a capacitance change. When a touch operation acts on the display 194, the terminal 100 detects intensity of the touch operation based on the pressure sensor 180A. The terminal 100 may also calculate a touch position based on a detection signal of the pressure sensor 180A. In some embodiments, touch operations that are performed at a same touch location but have different touch operation strength may correspond to different operation instructions. For example, when a touch operation whose touch operation intensity is less than a first pressure threshold is performed on an SMS message application icon, an instruction for viewing an SMS message is executed. When a touch operation whose touch operation intensity is greater than or equal to a first pressure threshold is performed on an SMS message application icon, an instruction for creating an SMS message is executed.

The gyroscope sensor 180B may be configured to determine a motion posture of the terminal 100. In some embodiments, an angular velocity of the terminal 100 around three axes (namely, x, y, and z axes) may be determined by using the gyroscope sensor 180B. The gyroscope sensor 180B may be configured to implement image stabilization during photographing. For example, when a shutter is pressed, the gyroscope sensor 180B detects a shaking angle of the terminal 100, calculates, based on the angle, a distance that a lens module needs to compensate, and allows the lens to cancel shaking of the terminal 100 through reverse motion, to implement image stabilization. The gyroscope sensor 180B may also be used in navigation and motion sensing game scenarios.

The barometric pressure sensor 180C is configured to measure barometric pressure. In some embodiments, the terminal 100 calculates an altitude by using a barometric pressure value obtained through measurement by the barometric pressure sensor 180C, to assist in positioning and navigation.

The magnetic sensor 180D includes a Hall sensor. The terminal 100 may detect opening and closing of a flip carrying case by using the magnetic sensor 180D. In some embodiments, when the terminal 100 is a flip phone, the terminal 100 may detect opening and closing of a flip cover by using the magnetic sensor 180D. Further, a feature such as automatic unlocking of the flip cover is set based on a detected opening or closing state of the leather case or a detected opening or closing state of the flip cover.

The acceleration sensor 180E may detect magnitudes of accelerations of the terminal 100 in various directions (generally on three axes), and may detect magnitude and a direction of gravity when the terminal 100 is still. The acceleration sensor 180E may be further configured to identify a posture of the electronic device, and is used in screen switching between a landscape mode and a portrait mode, a pedometer, or another application.

The distance sensor 180F is configured to measure a distance. The terminal 100 may measure a distance by using infrared or laser. In some embodiments, in a photographing scenario, the terminal 100 may measure a distance by using the distance sensor 180F, to implement fast focusing.

The optical proximity sensor 180G may include, for example, a light-emitting diode (LED) and an optical detector, for example, a photodiode. The light-emitting diode may be an infrared light-emitting diode. The terminal 100 emits infrared light by using the light-emitting diode. The terminal 100 uses the photodiode to detect reflected infrared light from a nearby object. When sufficient reflected light is detected, it may be determined that there is an object near the terminal 100. When insufficient reflected light is detected, the terminal 100 may determine that there is no object near the terminal 100. The terminal 100 may detect, by using the optical proximity sensor 180G, that the user holds the terminal 100 close to an ear to make or answer a call, and therefore automatically turn off a screen to save power. The optical proximity sensor 180G may also be configured to automatically unlock and lock a screen in a flip cover mode and a pocket mode.

The ambient light sensor 180L is configured to sense ambient light brightness. The terminal 100 may adaptively adjust brightness of the display 194 based on the sensed ambient light intensity. The ambient light sensor 180L may be further configured to automatically adjust a white balance during photographing. The ambient light sensor 180L may further cooperate with the optical proximity sensor 180G in detecting whether the terminal 100 is in a pocket, to prevent an accidental touch.

The fingerprint sensor 180H is configured to collect a fingerprint. The terminal 100 may use a collected fingerprint feature to implement fingerprint unlock, application access lock, fingerprint photographing, fingerprint call answering, and the like.

The temperature sensor 180J is configured to detect a temperature. In some embodiments, the terminal 100 executes a temperature processing policy based on a temperature detected by the temperature sensor 180J. For example, when the temperature reported by the temperature sensor 180J exceeds a threshold, the terminal 100 degrades performance of a processor near the temperature sensor 180J, to reduce power consumption for thermal protection. In some other embodiments, when a temperature is less than another threshold, the terminal 100 heats the battery 142 to prevent abnormal shutdown of the terminal 100 caused by the low temperature. In some other embodiments, when a temperature is less than still another threshold, the terminal 100 boosts an output voltage of the battery 142 to prevent abnormal shutdown caused by the low temperature.

The touch sensor 180K is also referred to as a "touch panel". The touch sensor 180K may be disposed on the display 194, and the touch sensor 180K and the display 194 form a touchscreen, which is also referred to as a "touch screen". The touch sensor 180K is configured to detect a touch operation performed on or near the touch sensor. The touch sensor may transfer the detected touch operation to the application processor to determine a type of the touch event. Visual output related to the touch operation may be provided through the display 194. In some other embodiments, the touch sensor 180K may also be disposed on a surface of the terminal 100 at a location different from that of the display 194.

The bone conduction sensor 180M may obtain a vibration signal. In some embodiments, the bone conduction sensor 180M may obtain a vibration signal of a vibration bone of a human vocal-cord part. The bone conduction sensor 180M may also be in contact with a human pulse to receive a blood pressure beating signal. In some embodiments, the bone conduction sensor 180M may alternatively be disposed in a headset to form a bone conduction headset. The audio module 170 may obtain a voice signal through parsing based on the vibration signal that is of the vibration bone of the vocal-cord part and that is obtained by the bone conduction sensor 180M, to implement a voice function. The application processor may parse heart rate information based on the blood pressure beating signal obtained by the bone conduction sensor 180M, to implement a heart rate detection function.

The button 190 includes a power button, a volume button, and the like. The button 190 may be a mechanical button, or may be a touch button. The terminal 100 may receive a button input, and generate a button signal input related to user setting and function control of the terminal 100.

The motor 191 may generate a vibration prompt. The motor 191 may be configured to produce an incoming call vibration prompt and a touch vibration feedback. For example, touch operations performed on different applications (for example, photographing and audio playback) may correspond to different vibration feedback effects. The motor 191 may also correspond to different vibration feedback effects for touch operations performed on different areas of the display 194. Different application scenarios (for example, time reminding, information receiving, an alarm clock, and a game) may also correspond to different vibration feedback effects. A touch vibration feedback effect may further be customized.

The indicator 192 may be an indicator light, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to come into contact with or be separated from the terminal 100. The terminal 100 may support one or N SIM card interfaces, where N is a positive integer greater than 1. The SIM card interface 195 may support a nano-SIM card, a micro-SIM card, a SIM card, and the like. A plurality of cards may be inserted into the same SIM card interface 195 at the same time. The plurality of cards may be of a same type or different types. The SIM card interface 195 may be compatible with different types of SIM cards. The SIM card interface 195 may also be compatible with the external storage card. The terminal 100 interacts with a network by using a SIM card, to implement functions such as calling and data communication. In some embodiments, the terminal 100 uses an eSIM, namely, an embedded SIM card. The eSIM card may be embedded in the terminal 100, and cannot be separated from the terminal 100.

The following describes a protocol encapsulation architecture of outbound data in the BeiDou communication system 10 provided in embodiments of this application.

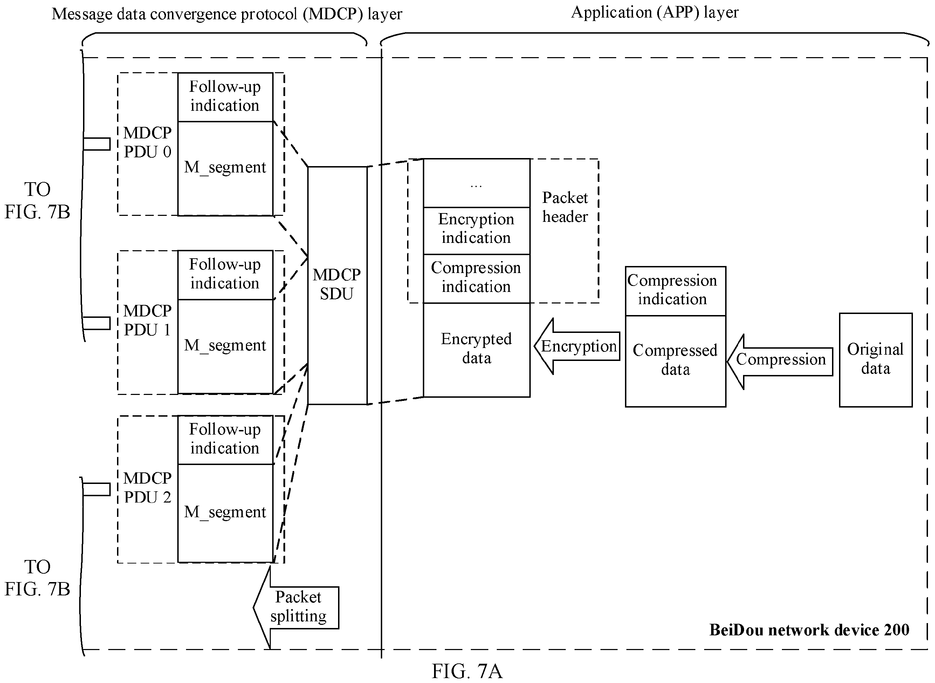

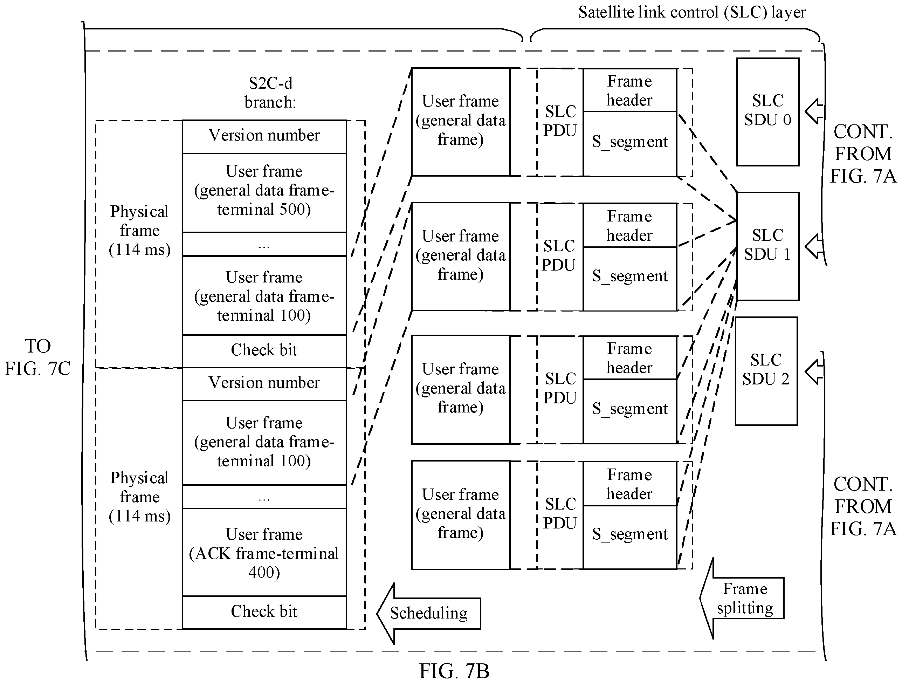

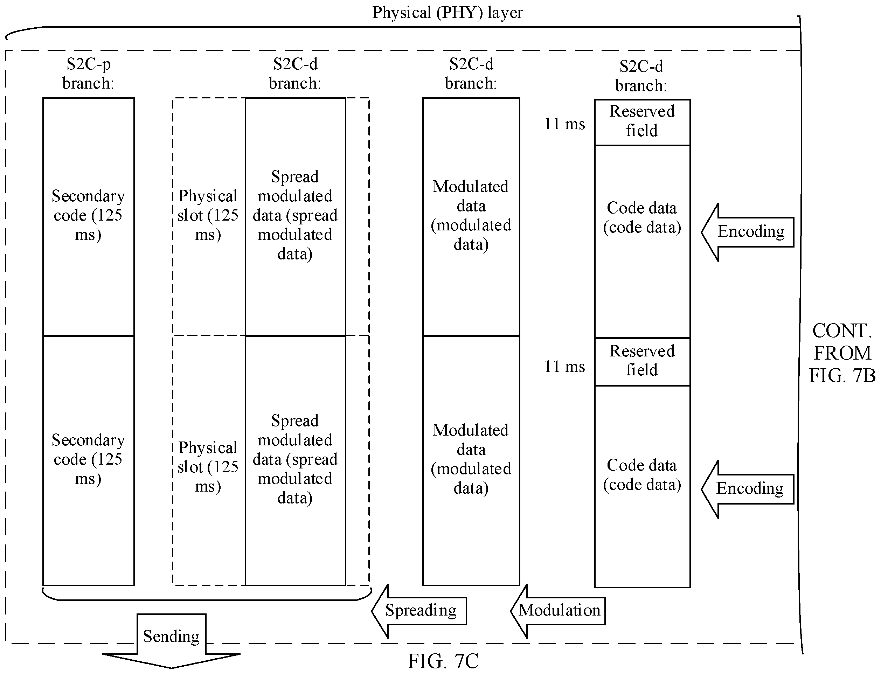

FIG. 7A, FIG. 7B, and FIG. 7C are a schematic diagram of a protocol encapsulation architecture of outbound data in the BeiDou communication system 10 according to an embodiment of this application.

As shown in FIG. 7A, FIG. 7B, and FIG. 7C, a BeiDou short packet transmission protocol layer of the BeiDou network device 200 may be divided into an application (application layer protocol) layer, a message convergence (message data convergence protocol, MDCP) layer, a satellite link control (satellite link control protocol, SLC) layer, and a physical (physical layer protocol, PHY) layer. The BeiDou network device 200 may include a BeiDou ground transceiver station 22, a BeiDou central station 23, and a BeiDou short packet converged communication platform 24. The BeiDou ground transceiver station 22 may be configured to be responsible for protocol processing at the PHY layer. The BeiDou central station 23 may be configured to be responsible for protocol processing at the SLC layer and the MDCP layer. The BeiDou short packet converged communication platform 24 may be configured to be responsible for protocol processing at the APP layer.

When the BeiDou network device 200 sends data to the terminal 100, a working procedure of the BeiDou short packet transmission protocol in the BeiDou network device 200 may be as follows:

At the APP layer, the BeiDou network device 200 may compress original data into compressed data by using a compression algorithm, and add a compression indication field before the compressed data, where the compression indication field may indicate a compression algorithm type of the compressed data. Then, the BeiDou network device 200 may encrypt the compressed data to obtain encrypted data, and add an encryption algorithm field to a header of the encrypted data, where the encryption algorithm field indicates an encryption algorithm type of the encrypted data. The BeiDou network device 200 may encapsulate the encrypted data, the compression indication field, and the encryption indication field into an application layer packet and deliver the application layer packet to the MDCP layer. The application layer packet may include a packet header and packet data. The packet header may include the compression indication field, the encryption indication field, and the like. The packet data includes the foregoing encrypted data.

Optionally, the BeiDou network device 200 may also encrypt the compression indication field and the compressed data together, to obtain encrypted data.

At the MDCP layer, the BeiDou network device 200 may obtain, through an inter-layer interface, an application layer packet delivered by the APP layer, and use the application layer packet as an MDCP SDU. At the MDCP layer, the BeiDou network device 200 may split the MDCP SDU into one or more pieces of MDCP segment data (M segment) with a fixed length, and add a follow-up indication field to a header of each piece of MDCP segment data, to obtain an MDCP PDU. In other words, the MDCP PDU includes the M_segment and the follow-up indication field. The follow-up indication field may indicate that the current MDCP PDU is a start MDCP PDU, an intermediate MDCP PDU, or a last MDCP PDU in a plurality of MDCP PDUs that are sent consecutively, or an MDCP PDU that is sent separately.

At the SLC layer, the BeiDou network device 200 may obtain, by using an inter-layer interface, an MDCP PDU delivered by the MDCP layer, and use the MDCP PDU as an SLC SDU. At the SLC layer, the BeiDou network device 200 may segment the SLC SDU into one or more (for example, a maximum of four) pieces of SLC segment data (S_segment) with a fixed length, and add frame header information to a header of each S_segment, to obtain an SLC PDU.

Herein, it may be understood that, to adapt to a frame length at the physical layer, data needs to be segmented at the SLC layer. However, based on an SLC layer design, one SLC SDU can be segmented into a maximum of four SLC PDUs. Therefore, data also needs to be segmented at the MDCP layer.

At the PHY layer, the BeiDou network device 200 may obtain, through an inter-layer interface, the SLC PDU delivered by the SLC layer. The BeiDou network device 200 may obtain SLC PDUs of one or more users from the SLC layer. The BeiDou network device 200 may splice SLC PDUs of a plurality of users and add a frame header (for example, a version number) of a physical frame to the SLC PDUs as a PHY layer code block (code block), add a check bit (for example, a cyclic redundancy check (cyclic redundancy check, CRC) code) to a tail of the code block, and perform encoding (for example, polar encoding) on the code block and the CRC code. An encoded physical frame and a reserved segment may form code data of a satellite-to-consumer data (satellite to consumer data, S2C-d) channel (a data channel for short) of a physical slot with a fixed length. The BeiDou network device 200 may separately add a plurality of SLC PDUs of one user to different physical frames. Then, the BeiDou network device 200 uses the code data of the S2C-d channel branch and pilot information of a satellite to consumer pilot (satellite to consumer pilot, S2C-p) channel (pilot channel for short) to form pilot code data, namely, outbound data. The BeiDou network device 200 may send the outbound data to the BeiDou short packet satellite 21, and the BeiDou short packet satellite 21 relays and forwards the outbound data to the terminal 100.

It may be understood that the pilot information of the S2C-p channel branch is related to a satellite beam. When a satellite beam number is known information, the pilot information (namely, a secondary code) of the S2C-p channel branch is also known and does not need to be decoded. The code data of the S2C-d channel branch needs to be decoded. The S2C-p channel and the S2C-d channel have a same center frequency and bandwidth, and a signal on the S2C-p channel and a signal on the S2C-d channel are orthogonal to each other.

**The following describes a protocol parsing architecture of outbound data in the BeiDou communication system 10 provided in embodiments of this application.**

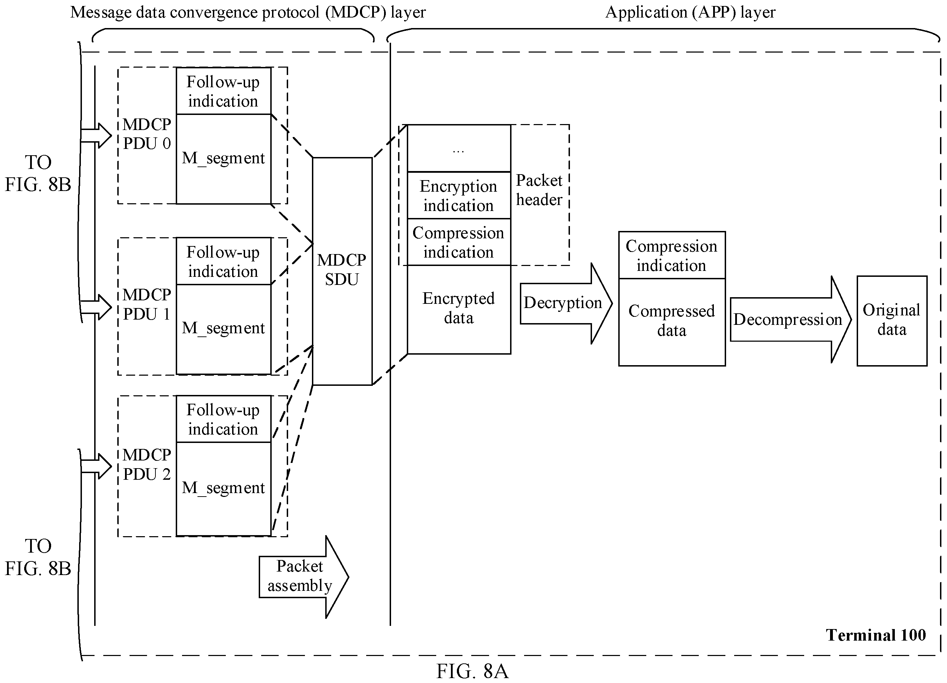

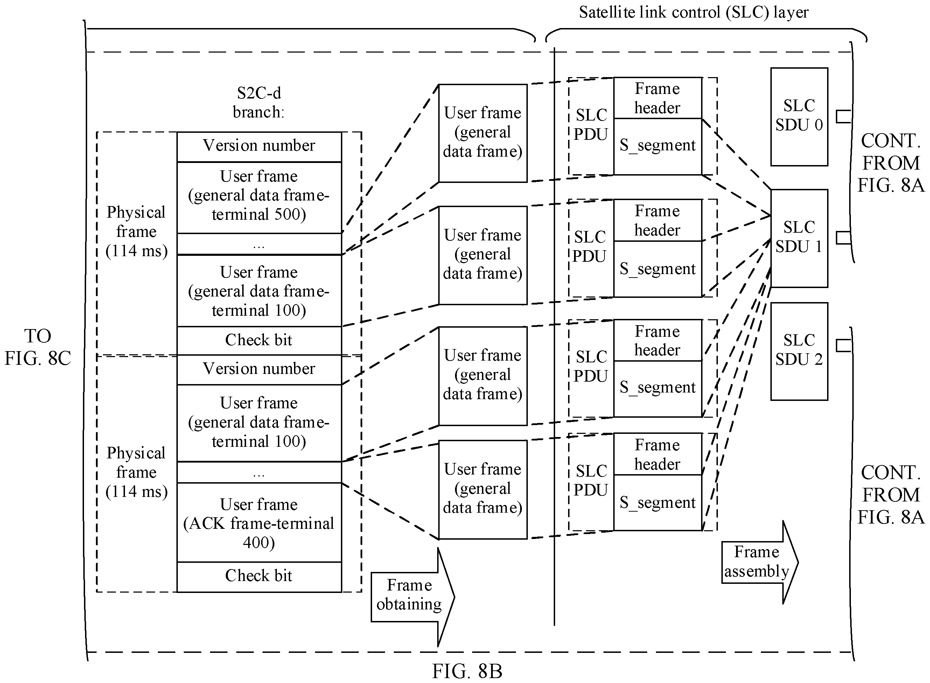

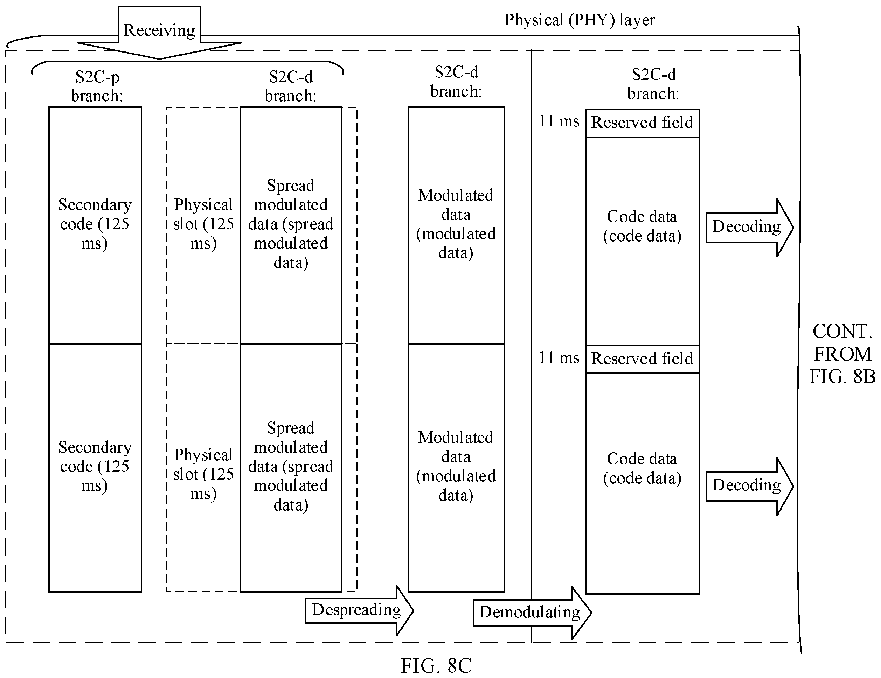

FIG. 8A, FIG. 8B, and FIG. 8C are a schematic diagram of a protocol parsing architecture of outbound data in the BeiDou communication system 10 according to an embodiment of this application.

As shown in FIG. 8A, FIG. 8B, and FIG. 8C, a BeiDou short packet transmission protocol layer of the terminal 100 may be divided into an application (application layer protocol) layer, a message data convergence protocol (message data convergence protocol, MDCP) layer, a satellite link control (satellite link control protocol, SLC) layer, and a physical (physical layer protocol, PHY) layer.

When the terminal 100 receives data sent by the BeiDou network device, a working procedure of the BeiDou short packet transmission protocol layer of the terminal 100 may be as follows:

At the PHY layer, the terminal 100 may obtain modulated and spread pilot code data sent by the BeiDou network device 200. The terminal 100 may despread the received spread modulated data (spread+modulated data), to obtain modulated data (modulated data). Then, the terminal 100 may demodulate the modulated data to obtain pilot code data (pilot+data). Then, the terminal 100 may remove pilot information from the pilot code data to obtain code data (code data). Then, the terminal 100 may decode the code data, and check integrity of a code block (code block) by using check data in a check bit field. If the code block is integrated, the terminal 100 may extract the code block (code block), deliver the code block to the SLC layer through an inter-layer interface, and use the code block as an SLC PDU of the SLC layer.

Herein, the pilot code data is the outbound data sent by the BeiDou network device 200, and the outbound data includes the code data of the S2C-d channel and the pilot information of the S2C-p channel.

At the SLC layer, the terminal 100 may splice SLC PDUs belonging to a same SLC SDU into one SLC SDU based on frame header information of the SLC PDUs. The terminal 100 may deliver the SLC SDU to the MDCP layer through an inter-layer interface, and use the SLC SDU as an MDCP PDU of the MDCP layer.

At the MDCP layer, the terminal 100 may splice all MDCP PDUs belonging to a same MDCP SDU into one MDCP SDU. The terminal 100 may deliver the MDCP SDU to the APP layer through an inter-layer interface, and use the MDCP SDU as an application layer packet received by the APP layer.

At the APP layer, the terminal 100 may decrypt and decompress the application layer packet based on a packet header of the application layer packet, to obtain original data.

In embodiments of this application, the foregoing protocol processing process is merely an example for description, and a specific protocol processing operation is not limited in this application.

**The following describes an outbound data transmission method in a BeiDou communication system provided in embodiments of this application.**

In some application scenarios, in the BeiDou communication system 10, connection status management and mobility management are not supported, and the BeiDou network device 200 cannot actively page a user. Therefore, before the terminal 100 receives service data delivered by the BeiDou network device 200, the terminal 100 needs to actively send a data request frame to the BeiDou network device 200. The terminal 100 may determine, by measuring an S2C-p pilot channel, an MCS used when the BeiDou network device 200 sends the service data to the terminal 100. The terminal 100 may add an MCS indication field to the data request frame, and the MCS indication field may indicate an MCS that the terminal 100 recommends being used when the BeiDou network device 200 sends the service data to the terminal 100. In this way, the terminal 100 can feed back an outbound MCS to the BeiDou network device 200 without additional signaling overheads, to improve channel utilization.

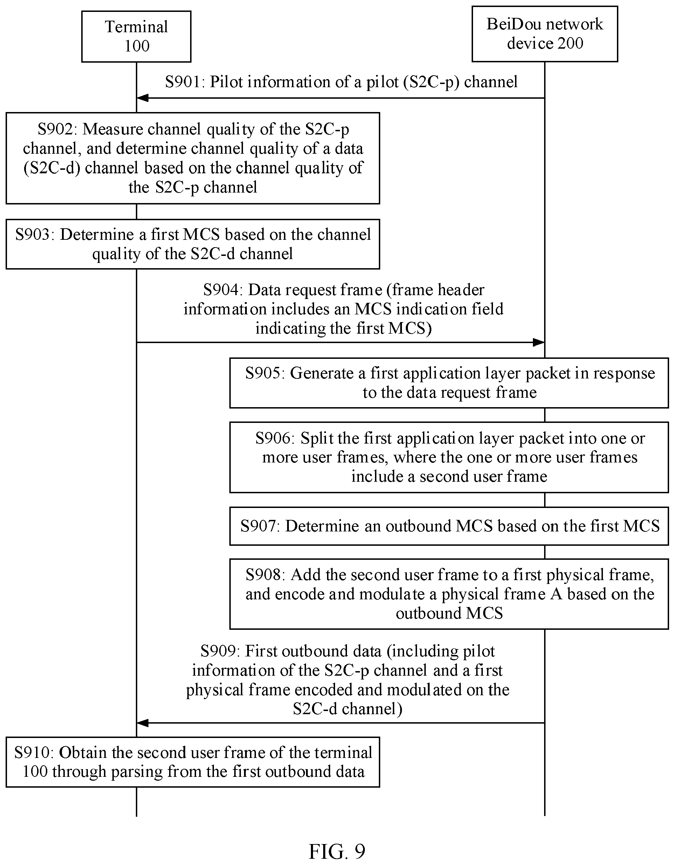

FIG. 9 is a schematic flowchart of an outbound data transmission method in a BeiDou communication system according to an embodiment of this application.

As shown in FIG. 9, the method includes the following steps.

S901: The BeiDou network device 200 sends pilot information on an S2C-p channel.

The BeiDou network device 200 may continuously send the pilot information on the S2C-p channel. The pilot information is used by each terminal in the BeiDou communication system to capture a data signal on an S2C-d channel.

S902: The terminal 100 measures channel quality of the S2C-p channel, and determines channel quality of the S2C-d channel based on the channel quality of the S2C-p channel.

The pilot information sent by the BeiDou network device 200 on the S2C-p channel is a secondary code known to the terminal 100. After receiving the pilot information, the terminal 100 may compare the secondary code in the pilot information with a known secondary code, to determine the channel quality of the S2C-p channel. The channel quality may include but is not limited to being measured by using an SNR.

Because the S2C-p channel and the S2C-d channel have a same center frequency and bandwidth, a signal on the S2C-p channel is orthogonal to a signal on the S2C-d channel. In addition, there is a difference between a transmit power used by the BeiDou network device 200 to send the pilot information on the S2C-p channel and a transmit power used to send data information on the S2C-d channel, and the difference is usually a fixed value. Therefore, after measuring the channel quality of the S2C-p channel, the terminal 100 may obtain the channel quality of the S2C-d channel through conversion based on the channel quality of the S2C-p channel.

The BeiDou network device 200 may determine an SNR of the outbound S2C-d channel based on Formula (1):

$$SNR_d = SNR_p + \delta \text{ Formula (1)}$$

In Formula (1), $SNR_d$ is an SNR of the S2C-d channel, $SNR_p$ is an SNR of the S2C-p channel, and $\delta$ is a channel quality difference between the S2C-d channel and the S2C-p channel.

S903: The terminal 100 determines a first modulation and coding scheme (MCS) based on the channel quality of the S2C-d channel.

The terminal 100 may determine the first MCS from a mapping table between an SNR and an MCS based on the SNR of the S2C-d channel. The mapping table between an SNR and an MCS may be obtained through physical layer simulation in the BeiDou communication system. A higher SNR indicates a higher MCS order.

For example, the mapping table between an SNR and an MCS may be shown in Table 1.

**Table 1**

| SNR | MCS | | |
|---|---|---|---|
| | Order | Modulation scheme | Coding rate (rate) |
| -5 dB < SNR ≤ 0 dB | 0 | BPSK | 1/2 |
| 0 dB < SNR ≤ 5 dB | 1 | BPSK | 3/4 |
| 5 dB < SNR ≤ 11 dB | 2 | QPSK | 1/2 |
| 11 dB < SNR ≤ 12 dB | 3 | QPSK | 3/4 |
| 12 dB < SNR ≤ 17.5 dB | 4 | 16QAM | 1/2 |
| 17.5 dB < SNR ≤ 22.5 dB | 5 | 16QAM | 3/4 |
| 22.5 dB < SNR | 6 | 64QAM | 3/4 |

It can be learned from Table 1 that -5 dB < SNR ≤ 0 dB corresponds to a 0-order MCS, namely, BPSK and a coding rate of 1/2; 0 dB < SNR ≤ 5 dB corresponds to a 1-order MCS, namely, BPSK and a coding rate of 3/4; 5 dB < SNR ≤ 11 dB corresponds to a 2-order MCS, namely, QPSK and a coding rate of 1/2; 11 dB < SNR ≤ 12 dB corresponds to a 3-order MCS, namely, QPSK and a coding rate of 3/4; 12 dB < SNR ≤ 17.5 dB corresponds to a 4-order MCS, namely, 16QAM and a coding rate of 1/2 17.5 dB < SNR ≤ 22.5 dB corresponds to a 5-order MCS, namely, 16QAM and a coding rate of 3/4; and 22.5 dB < SNR corresponds to a 6-order MCS, that is, 64QAM and a coding rate of 3/4. Table 1 is merely used to explain this application, and should not constitute a limitation. The mapping table between an SNR and an MCS may include fewer or more mapping relationships between an SNR and an MCS.

For example, when the SNR on the S2C-d channel measured by the terminal 100 is 10 dB, the terminal 100 may determine, based on the mapping table between an SNR and an MCS shown in Table 1, that the first MCS is QPSK and a coding rate of 1/2.

S904: The terminal 100 sends a data request frame to the BeiDou network device 200. Frame header information of the data request frame includes an MCS indication field, and the MCS indication field indicates the first MCS. The data request frame is used to request the BeiDou network device 200 to send service data to the terminal 100.

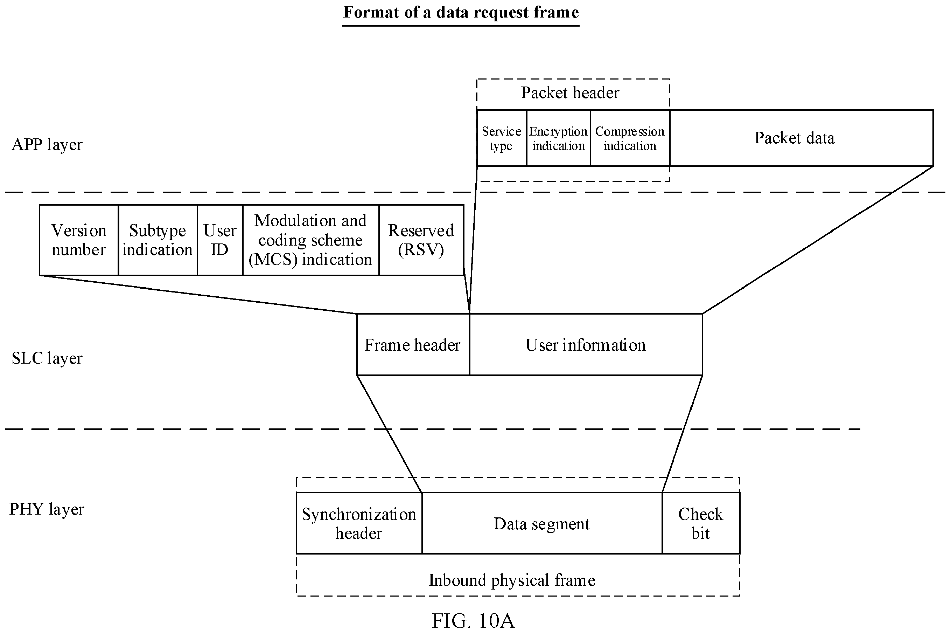

Specifically, in the BeiDou network device 200, the data request frame may include a letterbox profile query frame and a letter download frame. For a frame format of the data request frame, refer to FIG. 10A.

As shown in FIG. 10A, an inbound physical frame may include a synchronization header, a data segment, and a check bit. The synchronization header of the inbound physical frame may be used to distinguish a frame type of the inbound physical frame, and a time length of the synchronization header may be 40 ms. The frame type of the inbound physical frame may include a location reporting frame, an emergency rescue frame, and a packet communication frame. When the inbound physical frame is a packet communication frame, a frame type indicated by a value of the synchronization header is a packet communication frame. The check bit may be used to check integrity of data in the data segment. In the BeiDou communication system, cyclic redundancy check (CRC) may be used to check the data segment, and the check bit may include a CRC check code.

The data segment may include a user frame, and the user frame may include frame header information and user information. The frame header information may include a version number field, a subtype indication field, a user ID field, an MCS indication field, and a reserved (reserved, RSV) field. The version number field may indicate a protocol format version of the user frame. The subtype indication field may indicate a subtype of the user frame. The subtype of the user frame may include a general data frame, an ACK frame, a receipt frame, and the like. The user ID field may indicate a device identifier of the terminal 100. The MCS indication field may indicate the first MCS that the terminal 100 recommends to the BeiDou network device 200 to use.

For example, when there are three MCSs used by the BeiDou network device 200, a data length of the MCS indication field may be 2 bits. A value of the MCS indication field and a meaning thereof may be shown in Table 2.

**Table 2**

| Value of the MCS indication field | MCS |
|---|---|
| 00 | NA |
| 01 | MCSO |
| 10 | MCS1 |
| 11 | MCS2 |

It can be learned from Table 2 that, if there are three MCSs used by the BeiDou network device 200, a value "00" of the MCS indication field is an invalid (NA) value, and indicates the BeiDou network device 200 to select an MCS (for example, an MCS with a lowest order is selected by default). A value "01" of the MCS indication field corresponds to MCSO (a 0-order MCS). A value "10" of the MCS indication field corresponds to MCS1 (a 1-order MCS). A value "11" of the MCS indication field corresponds to MCS2 (a 2-order MCS). For example, MCSO may be BPSK and a coding rate of 3/4, MCS1 may be QPSK and a coding rate of 1/2, and MCS2 may be QPSK and a coding rate of 3/4. The example shown in Table 2 is merely used to explain this application and shall not be construed as a limitation.

During specific implementation, the BeiDou network device 200 may use not limited to three MCS types, and may use fewer or more MCS types. The data length of the MCS indication field may also change based on a quantity of MCS types used by the BeiDou network device 200. For example, when there are five MCS types used by the BeiDou network device 200, the data length of the MCS indication field may be 3 bits.

The user information may include an application layer packet. The application layer packet may include a packet header and packet data. The packet header may include a service type field, an encryption indication field, and a compression indication field. The service type field may indicate a service type of the application layer packet. The service type of the application layer packet may include a letterbox profile query service, a letter download service, and a communication packet service.

When the service type of the application layer packet is the letterbox profile query service, the packet data may carry query information of the terminal 100, where the query information includes query time of the terminal 100, a quantity of messages that are sent by a specified user to the terminal 100 and that are queried by the terminal 100, and the like.

When the service type of the application layer packet is the letter download service, the packet data may carry an identifier of a letter message that the terminal 100 requests the BeiDou network device 200 to send.

S905: The BeiDou network device 200 generates a first application layer packet in response to the data request frame.

Specifically, after receiving the data request frame, the BeiDou network device 200 may obtain the application layer packet through parsing from the data request frame, and distinguish the service type of the data request frame from the service type indication field of the application layer service packet.

If the service type of the data request frame is the letterbox profile query service, the terminal 100 generates the first application layer packet based on the query information.

If the service type of the data request frame is the letter download service, the terminal 100 obtains, through parsing, a message identifier that is sent by the BeiDou network device 200, that is requested by the terminal 100, and that is carried in the packet data of the data request frame. The BeiDou network device 200 may determine a first message from a letterbox of the terminal 100 based on the message identifier that is sent by the BeiDou network device 200 and that is requested by the terminal 100, and generate the first application layer packet based on the first message.

S906: The BeiDou network device 200 splits the first application layer packet into one or more user frames, where the one or more user frames include a second user frame.

The second user frame may be any one of the one or more user frames in the first application layer packet.

Specifically, for a process in which the BeiDou network device 200 splits the first application layer packet into a plurality of user frames, refer to the protocol encapsulation process for the application layer packet in the embodiment shown in FIG. 7A, FIG. 7B, and FIG. 7C. Details are not described herein again.

S907: After receiving the data request frame, the BeiDou network device 200 may determine an outbound MCS based on the first MCS indicated by the MCS indication field in the data request frame.

S908: The BeiDou network device 200 adds the second user frame to a first physical frame, and encodes and modulates the first physical frame based on the outbound MCS.

In a possible implementation, the outbound MCS is the same as the first MCS. The BeiDou network device 200 directly encodes and modulates the first physical frame by using the first MCS indicated by the terminal 100 in the MCS indication field.

In a possible implementation, the BeiDou network device 200 may determine the outbound MCS based on an actual outbound sending service quantity and the first MCS. For example, a terminal 400 indicates, by using an MCS indication field in an inbound user frame, the BeiDou network device 200 to send service data to the terminal 400 by using a fifth MCS. The BeiDou network device 200 may schedule a fifth user frame of the terminal 400 and the second user frame of the terminal 100 into the first physical frame. If an order of the fifth MCS is less than an order of the first MCS, the BeiDou network device 200 may encode and modulate the first physical frame by using the fifth MCS. If the order of the fifth MCS is greater than or equal to the order of the first MCS, the BeiDou network device 200 may encode and modulate the first physical frame by using the first MCS.

For example, the terminal 100 may indicate, by using an MCS indication field, the BeiDou network device 200 to send service data to the terminal 100 by using MCS1 (for example, QPSK and a coding rate of 1/2). The terminal 400 may indicate, by using an MCS indication field in a letter message request, the BeiDou network device 200 to send service data to the terminal 400 by using MCS2 (QPSK and a coding rate of 3/4). When the BeiDou network device 200 schedules both a user frame A of the terminal 100 and a user frame B of the terminal 400 into one outbound physical frame, the BeiDou network device 200 may send, by using MCS1 (for example, QPSK and a coding rate of 1/2), the physical frame into which the user frame 1 and the user frame 2 are scheduled.

For another example, the terminal 100 may indicate, by using an MCS indication field, the BeiDou network device 200 to send service data to the terminal 100 by using MCS1 (for example, QPSK and a coding rate of 1/2). The terminal 400 may indicate, by using an MCS indication field in a letter message request, the BeiDou network device 200 to send service data to the terminal 400 by using MCS2 (QPSK and a coding rate of 3/4). When the BeiDou network device 200 schedules both a user frame 1 of the terminal 100 and a user frame 2 of the terminal 400 into one outbound physical frame, the BeiDou network device 200 may send, by using MCS 1 (for example, QPSK and a coding rate of 1/2), the physical frames into which the user frame 1 and the user frame 2 are scheduled.

In this way, when MCSs indicated by a plurality of terminals in a same outbound physical frame into which the user frames are scheduled are inconsistent, the BeiDou network device 200 may send the outbound physical frame by using an MCS with a lowest order in the MCSs indicated by the plurality of terminals, to ensure that the plurality of terminals can obtain respective user frames through parsing from the outbound physical frame.

In a possible implementation, the terminal 400 indicates, by using an MCS indication field, the BeiDou network device 200 to send service data to the terminal 400 by using a fifth MCS. The BeiDou network device 200 may schedule a fifth user frame of the terminal 400 and the second user frame of the terminal 100 into the first physical frame. If an order of the fifth MCS is less than an order of the first MCS, the BeiDou network device 200 may encode and modulate the first physical frame by using the first MCS. If an order of the fifth MCS is greater than or equal to an order of the first MCS, the BeiDou network device 200 may encode and modulate the first physical frame by using the fifth MCS. In this way, when user frames of a plurality of terminals are scheduled into a same outbound physical frame, and MCSs indicated by the plurality of terminals are inconsistent, the BeiDou network device 200 may send the outbound physical frame by using an MCS with a largest order in the MCSs indicated by the plurality of terminals, to increase a transmission capacity.

In some embodiments, when scheduling and sending user frames of a plurality of terminals, the BeiDou network device 200 may schedule user frames of terminals with a same type of outbound channel quality into a same physical frame.

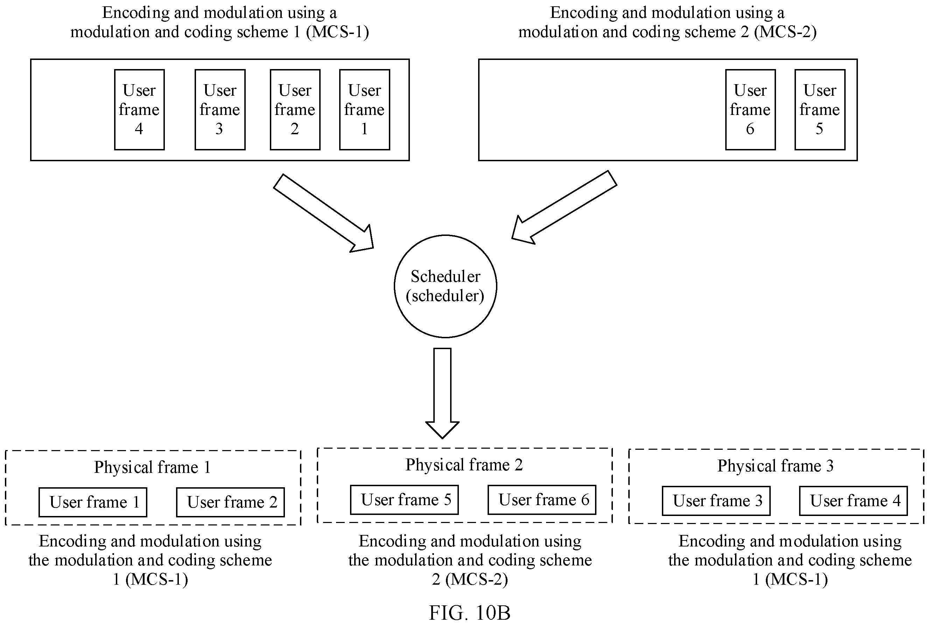

For example, as shown in FIG. 10B, user frames that need to be scheduled and sent by the BeiDou network device 200 include a user frame 1, a user frame 2, a user frame 3, a user frame 4, a user frame 5, and a user frame 6. The user frame 1, the user frame 2, the user frame 3, and the user frame 4 need to use a modulation and coding scheme 1 (MCS-1) for encoding and modulation. The user frame 5 and the user frame 6 need to use a modulation and coding scheme 2 (MCS-2) for encoding and modulation. Because a time length of the outbound physical frame is limited, the outbound physical frame accommodates limited data, and the outbound physical frame accommodates limited user frames. A scheduler (scheduler) of the BeiDou network device 200 may schedule the user frame 1 and the user frame 2 into a physical frame 1, and encode and modulate the physical frame 1 by using the MCS-1. The scheduler of the BeiDou network device 200 may schedule the user frame 5 and the user frame 6 into a physical frame 2, and encode and modulate the physical frame 1 by using the MCS-2. The scheduler of the BeiDou network device 200 may schedule the user frame 3 and the user frame 4 into a physical frame 3, and encode and modulate the physical frame 3 by using the MCS-1. The foregoing examples are merely used to explain this application, and should not constitute a limitation.

In a possible implementation, the BeiDou network device 200 may preferentially schedule a user frame with a higher MCS coding rate.

In a possible implementation, the BeiDou network device 200 may add, to one physical frame, user frames that are of a plurality of terminals and that have a same modulation scheme but different coding rates in the MCS, and transmit the physical frame by using a lower coding rate in the MCS indicated by the plurality of terminals.

In this embodiment of this application, step S907 is performed after step S904 and before step S908. This step is not limited to be performed after step S905 and step S906, and may alternatively be performed before step S905 or between step S905 and step S906.

S909: The BeiDou network device 200 sends first outbound data. The first outbound data includes pilot information of an S2C-p channel and a first physical frame encoded and modulated on an S2C-d channel.

S910: After receiving the first outbound data sent by the BeiDou network device 200, the terminal 100 obtains the second user frame of the terminal 100 through parsing from the first outbound data.

The terminal 100 may demodulate and decode the received first outbound data by using the determined first MCS. If the decoding succeeds, the terminal 100 may obtain the second user frame of the terminal 100 through parsing from the first physical frame.

If the terminal 100 fails to perform decoding, the terminal 100 may traverse other MCSs to decode the first outbound data until the decoding succeeds.

Specifically, a process in which the terminal 100 may decode the first outbound data may be as follows:

The terminal 100 demodulates and decodes second outbound data by using a selected MCS. If a check value calculated by the terminal 100 based on a data segment in a decoded physical frame is the same as a value of a check bit field in the decoded physical frame, the terminal 100 determines that the decoding succeeds. If a check value calculated by the terminal 100 based on a data segment in a decoded physical frame is different from a value of a check bit field in the decoded physical frame, the terminal 100 determines that the decoding fails.

According to the outbound data transmission method in the BeiDou communication system provided in this embodiment of this application, the terminal 100 can determine the first MCS by measuring the channel quality of the S2C-p channel in the outbound data, and the data request frame carries the MCS indication field, to indicate the BeiDou network device 200 to encode and modulate, by using the first MCS indicated by the MCS indication field, the service data to be sent to the terminal 100. In this way, the terminal 100 can feed back an outbound MCS to the BeiDou network device 200 without additional signaling overheads, to improve channel utilization.

In some application scenarios, the BeiDou network device 200 may send a user frame to the terminal 100 in an acknowledgment mode. After receiving the user frame sent by the BeiDou network device 200 to the terminal 100, the terminal 100 may return an ACK to the BeiDou network device 200. The ACK indicates a receiving status of the user frame. Therefore, when the terminal 100 can obtain, through parsing, the user frame delivered by the BeiDou network device 200, the terminal 100 may determine, by measuring the channel quality of the S2C-d channel, the MCS used when the BeiDou network device 200 sends the service data to the terminal 100. When returning the ACK to the BeiDou network device 200, the terminal 100 may add an MCS indication field to the ACK. The MCS indication field may indicate an MCS used by the terminal 100 to indicate the BeiDou network device 200 to send the service data to the terminal 100. In this way, the terminal 100 can feed back an outbound MCS to the BeiDou network device 200 without additional signaling overheads, to improve channel utilization.

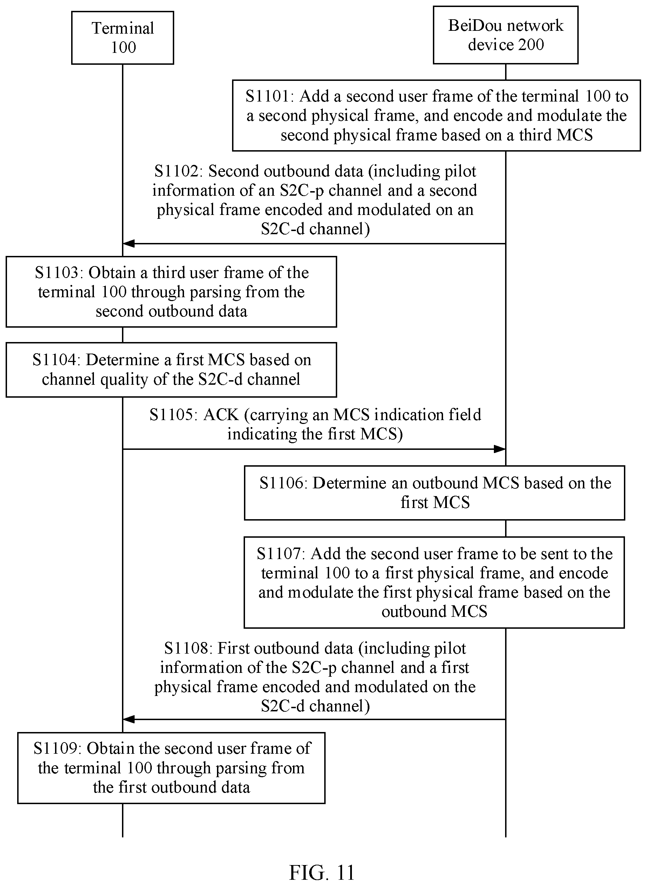

FIG. 11 is a schematic flowchart of an outbound data transmission method in a BeiDou communication system according to an embodiment of this application.

As shown in FIG. 11, the method includes the following steps.

S1101: The BeiDou network device 200 adds a third user frame of the terminal 100 to a second physical frame, and encodes and modulates the second physical frame based on a third MCS.

When the third user frame is a first frame SLC PDU in an application layer packet, the third MCS may be an MCS of a lowest order in MCSs supported by the BeiDou network device 200.

S1102: The BeiDou network device 200 sends second outbound data, where the second outbound data includes pilot information of an S2C-p channel and a second physical frame encoded and modulated on a S2C-d channel.

S1103: The terminal 100 obtains the third user frame of the terminal 100 through parsing from the second outbound data.

The third MCS may be preset on the terminal 100, and the terminal 100 may demodulate and decode a received first outbound data by using the third MCS. If the decoding succeeds, the terminal 100 may obtain the third user frame of the terminal 100 through parsing from the second physical frame.

If the terminal 100 fails to decode the second outbound data based on the third MCS, the terminal 100 may traverse other MCSs to demodulate and decode the second outbound data until the decoding succeeds.

S 1104: The terminal 100 determines a first MCS based on channel quality of the S2C-d channel.

After obtaining a first user frame of the terminal 100 through decoding from first outbound data, the terminal 100 may complete channel quality assessment on the S2C-d channel. The channel quality may include but is not limited to being measured by using an SNR.

The terminal 100 may determine the first MCS from a mapping table between an SNR and an MCS based on an SNR of the S2C-d channel. The mapping table between an SNR and an MCS may be obtained through physical layer simulation in the BeiDou communication system. For example, for the mapping table between an SNR and an MCS, refer to Table 1 in the embodiment shown in FIG. 9. Details are not described herein again.

S1105: The terminal 100 sends an ACK to the BeiDou network device 200. The ACK indicates a status of receiving the third user frame by the terminal 100. The ACK carries an MCS indication field, and the MCS indication field indicates the first MCS.

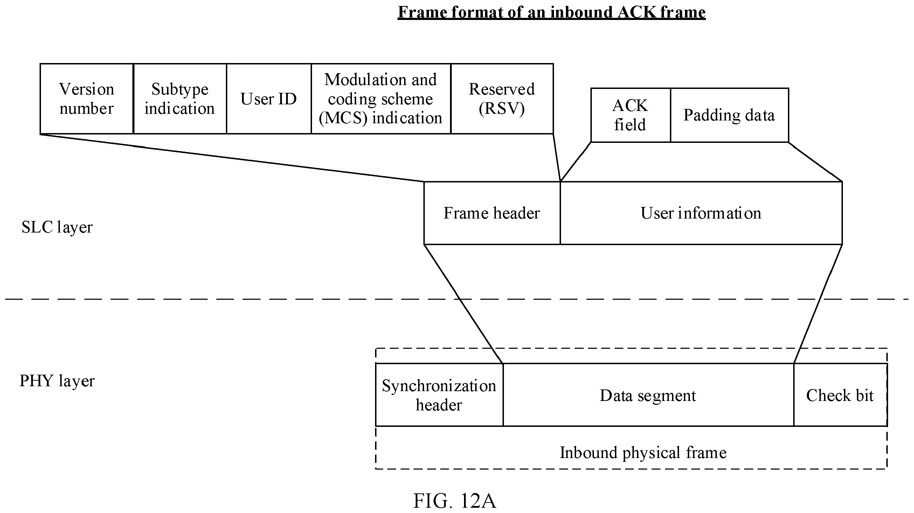

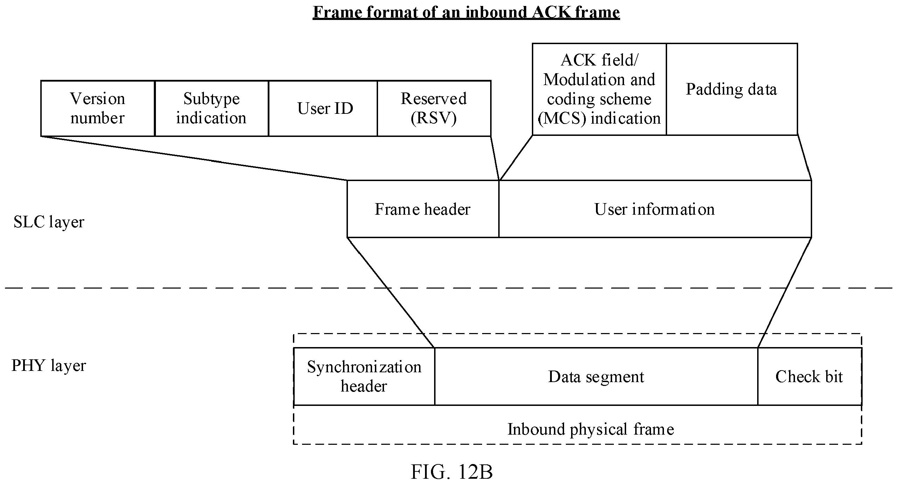

For a frame format of the ACK, refer to a frame format of an inbound ACK frame shown in FIG. 12A or FIG. 12B.

1. As shown in FIG. 12A, a frame format of an inbound physical frame may include a synchronization header, a data segment, and a check bit. The synchronization header of the inbound physical frame may be used to distinguish a frame type of the inbound physical frame, and a time length of the synchronization header may be 40 ms. The frame type of the inbound physical frame may include a location reporting frame, an emergency rescue frame, and a packet communication frame. When the inbound physical frame is a packet communication frame, a frame type indicated by a value of the synchronization header is a packet communication frame. The check bit may be used to check integrity of data in the data segment. In the BeiDou communication system, cyclic redundancy check (CRC) may be used to check the data segment, and the check bit may include a CRC check code.

The data segment may include a user frame, and the user frame may include frame header information and user information. The frame header information may include a version number field, a subtype indication field, a user ID field, an MCS indication field, and a reserved (reserved, RSV) field. The version number field may indicate a protocol format version of the user frame. The subtype indication field may indicate a subtype of the user frame. The subtype of the user frame may include a general data frame, an ACK frame, a receipt frame, and the like. A subtype indicated by a value of the subtype indication field of the inbound ACK frame is an ACK frame. The user ID field may indicate a device identifier of the terminal 100. The MCS indication field may indicate a fourth MCS that the terminal 100 recommends to the BeiDou network device 200 to use.

The user information of the inbound ACK frame may include an ACK field and padding data. The ACK field may be 1 bit, and the padding data may be used to pad the inbound ACK frame to a specified data length, to meet a requirement that the inbound physical frame has a fixed data length. The ACK field may indicate whether the terminal 100 receives an SLC PDU that is at the SLC layer and that has been sent by the BeiDou network device 200 to the terminal 100. For example, when a value of the ACK field is "0", it indicates that the terminal 100 does not receive the SLC PDU sent by the BeiDou network device 200 to the terminal 100. When a value of the ACK field is " 1 ", it indicates that the terminal 100 has received the SLC PDU sent by the BeiDou network device 200 to the terminal 100.

For example, when there are three MCSs used by the BeiDou network device 200, a data length of the MCS indication field may be 2 bits. A value of the MCS indication field and a meaning thereof may be shown in Table 3.

**Table 3**

| Value of the MCS indication field | MCS |
|---|---|
| 00 | NA |
| 01 | MCS0 |
| 10 | MCS1 |
| 11 | MCS2 |

It can be learned from Table 3 that, if there are three MCSs used by the BeiDou network device 200, a value "00" of the MCS indication field is an invalid (NA) value. A value "01" of the MCS indication field corresponds to MCS0 (a 0-order MCS). A value "10" of the MCS indication field corresponds to MCS1 (a 1-order MCS). A value "11" of the MCS indication field corresponds to MCS2 (a 2-order MCS). For example, MCS0 may be BPSK and a coding rate of 3/4, MCS1 may be QPSK and a coding rate of 1/2, and MCS2 may be QPSK and a coding rate of 3/4. The example shown in Table 3 is merely used to explain this application and shall not be construed as a limitation.

During specific implementation, the BeiDou network device 200 may use not limited to three MCS types, and may use fewer or more MCS types. The data length of the MCS indication field may also change based on a quantity of MCS types used by the BeiDou network device 200. For example, when there are five MCS types used by the BeiDou network device 200, the data length of the MCS indication field may be 3 bits.

For another example, a data length of the MCS indication field may be fixed to 2 bits. A value of the MCS indication field and a meaning thereof may be shown in Table 4.

**Table 4**

| Value of the MCS indication field | MCS |
|---|---|
| 00 | NA |
| 01 | Unchanged |
| 10 | Increase an order of an MCS |
| 11 | Reduce an order of an MCS |

It can be learned from Table 4 that, if there are three MCSs used by the BeiDou network device 200, a value "00" of the MCS indication field is an invalid (NA) value. A value "01" of the MCS indication field indicates the BeiDou network device 200 to continue to use the third MCS used when the physical frame A is encoded and modulated to encode and modulate a subsequent user frame of the terminal 100. In other words, the first MCS is the same as the third MCS. A value "10" of the MCS indication field indicates the BeiDou network device 200 to encode and modulate a subsequent user frame of the terminal 100 by using a first MCS that is obtained by adding an order (for example, adding one order) based on the third MCS used when the physical frame A is encoded and modulated. A value "11" of the MCS indication field indicates the BeiDou network device 200 to encode and modulate a subsequent user frame of the terminal 100 by using a first MCS that is obtained by subtracting an order (for example, subtracting one order) based on the third MCS used when the physical frame A is encoded and modulated. The example shown in Table 4 is merely used to explain this application and shall not be construed as a limitation.

In some embodiments, when the data length of the MCS indication field may be fixed to 2 bits, if an MCS order type supported by the BeiDou network device 200 is less than or equal to 3, the terminal 100 may preferentially use the feedback mode shown in Table 3, and feed back the MCS information to the BeiDou network device 200 by using the MCS indication field in the ACK frame. If the MCS order type supported by the BeiDou network device 200 is greater than 3, the terminal 100 may preferentially use the feedback mode shown in Table 4, and feed back the MCS information to the BeiDou network device 200 by using the MCS indication field in the ACK frame.

2. As shown in FIG. 12B, a frame format of an inbound physical frame may include a synchronization header, a data segment, and a check bit. The synchronization header of the inbound physical frame may be used to distinguish a frame type of the inbound physical frame, and a time length of the synchronization header may be 40 ms. The frame type of the inbound physical frame may include a location reporting frame, an emergency rescue frame, and a packet communication frame. When the inbound physical frame is a packet communication frame, a frame type indicated by a value of the synchronization header is a packet communication frame. The check bit may be used to check integrity of data in the data segment. In the BeiDou communication system, cyclic redundancy check (CRC) may be used to check the data segment, and the check bit may include a CRC check code.

The data segment may include a user frame, and the user frame may include frame header information and user information. The frame header information may include a version number field, a subtype indication field, a user ID field, and a reserved (reserved, RSV) field. The version number field may indicate a protocol format version of the user frame. The subtype indication field may indicate a subtype of the user frame. The subtype of the user frame may include a general data frame, an ACK frame, a receipt frame, and the like. A subtype indicated by a value of the subtype indication field of the inbound ACK frame is an ACK frame. The user ID field may indicate a device identifier of the terminal 100.

The user information of the inbound ACK frame may include an ACK field and padding data. The ACK field may include an MCS indication field, and the ACK field may be 2 bits. The padding data may be used to pad the inbound ACK frame to a specified data length, to meet a requirement that the inbound physical frame has a fixed data length. Because the ACK field includes the MCS indication field, the ACK field may indicate whether the terminal 100 receives the SLC PDU that is at the SLC layer and that is sent by the BeiDou network device 200 to the terminal 100. If the ACK field indicates that the terminal 100 has received the SLC PDU that is at the SLC layer and that is sent by the BeiDou network device 200 to the terminal 100, the ACK field may further indicate the first MCS that is recommended by the terminal 100 to be used by the BeiDou network device 200.

For example, when there are three MCSs used by the BeiDou network device 200, a data length of the ACK field may be 2 bits. A value of the ACK field and a meaning thereof may be shown in Table 5.

**Table 5**

| Value of the ACK field | MCS |
|---|---|
| 00 | NACK |

(continued)

| Value of the ACK field | MCS |
|---|---|
| 01 | MCS0 |
| 10 | MCS1 |
| 11 | MCS2 |

It can be learned from Table 5 that, there may be three MCSs used by the BeiDou network device 200.

1. When the terminal 100 uses a feedback mode of a single-frame feedback, after the terminal 100 receives one frame of SLC PDU sent by the BeiDou network device 200, the terminal 100 may return an ACK to the BeiDou network device 200.

When a value of the ACK field is "00", it indicates "NACK", and indicates that the terminal 100 does not receive a previous frame of SLC PDU (namely, a user frame A) sent by the BeiDou network device 200.

When a value of the ACK field is "01", it indicates that the terminal 100 has received a previous frame of SLC PDU (namely, a user frame A) sent by the BeiDou network device 200, and indicates the BeiDou network device 200 to perform encoding and modulation by using MCS0 (a 0-order MCS) when the BeiDou network device 200 sends a next frame of SLC PDU (namely, a user frame B).

When a value of the ACK field is "10", it indicates that the terminal 100 has received a previous frame of SLC PDU (namely, a user frame A) sent by the BeiDou network device 200, and indicates the BeiDou network device 200 to perform encoding and modulation by using MCS1 (a 1-order MCS) when the BeiDou network device 200 sends a next frame of SLC PDU (namely, a user frame B).

When a value of the ACK field is " 11", it indicates that the terminal 100 has received a previous frame of SLC PDU (namely, a user frame A) sent by the BeiDou network device 200, and indicates the BeiDou network device 200 to perform encoding and modulation by using MCS2 (a 2-order MCS) when the BeiDou network device 200 sends a next frame of SLC PDU (namely, a user frame B). For example, MCS0 may be BPSK and a coding rate of 3/4, MCS1 may be QPSK and a coding rate of 1/2, and MCS2 may be QPSK and a coding rate of 3/4. The example shown in Table 5 is merely used to explain this application and shall not be construed as a limitation.

2. When the terminal 100 uses a feedback mode of a multi-frame feedback, after the terminal 100 receives a group of (N, for example, N may be 4) SLC PDUs sent by the BeiDou network device 200, the terminal 100 may return an ACK to the BeiDou network device 200.

When a value of the ACK field is "00", it indicates "NACK", and indicates that the terminal 100 does not completely receive a group of (N) SLC PDUs sent by the BeiDou network device 200.

When a value of the ACK field is "01", it indicates that the terminal 100 has completely received a previous group of SLC PDUs sent by the BeiDou network device 200, and indicates the BeiDou network device 200 to perform encoding and modulation by using MCS0 (a 0-order MCS) when the BeiDou network device 200 sends a next group of SLC PDUs.

When a value of the ACK field is "10", it indicates that the terminal 100 has completely received a previous group of SLC PDUs (namely, a user frame A) sent by the BeiDou network device 200, and indicates the BeiDou network device 200 to perform encoding and modulation by using MCS1 (a 1-order MCS) when the BeiDou network device 200 sends a next group of SLC PDUs.

When a value of the ACK field is " 11", it indicates that the terminal 100 has completely received a previous group of SLC PDUs (namely, a user frame A) sent by the BeiDou network device 200, and indicates the BeiDou network device 200 to perform encoding and modulation by using MCS2 (a 2-order MCS) when the BeiDou network device 200 sends a next group of SLC PDUs. For example, MCS0 may be BPSK and a coding rate of 3/4, MCS1 may be QPSK and a coding rate of 1/2, and MCS2 may be QPSK and a coding rate of 3/4. The example shown in Table 5 is merely used to explain this application and shall not be construed as a limitation.

During specific implementation, the BeiDou network device 200 may use not limited to three MCS types, and may use fewer or more MCS types. The data length of the ACK field may also change based on a quantity of MCS types used by the BeiDou network device 200. For example, when there are five MCS types used by the BeiDou network device 200, the data length of the MCS indication field may be 3 bits.

For another example, a data length of the ACK field may be fixed to 2 bits. A value of the ACK field and a meaning thereof may be shown in Table 6.

**Table 6**

| Value of the ACK field | MCS |
| --- | --- |
| 00 | NACK |
| 01 | Unchanged |
| 10 | Increase an order of an MCS |
| 11 | Reduce an order of an MCS |

It can be learned from Table 6 that, if there are three MCSs used by the BeiDou network device 200,

when a value of the ACK field is "00", it indicates "NACK", and indicates that the terminal 100 does not receive a previous frame of SLC PDU (namely, a user frame A) sent by the BeiDou network device 200;
when a value of the ACK field is "01 ", it indicates that the terminal 100 has received a previous frame of SLC PDU (namely, a user frame A) sent by the BeiDou network device 200, and the BeiDou network device 200 continues to use the third MCS used when the physical frame A is encoded and modulated to encode and modulate a subsequent SLC PDU (namely, a user frame B) of the terminal 100; and in other words, the first MCS is the same as the third MCS;
when a value of the ACK field is "10", it indicates that the terminal 100 has received a previous frame of SLC PDU (namely, a user frame A) sent by the BeiDou network device 200, and the BeiDou network device 200 encodes and modulates a subsequent SLC PDU (namely, a user frame B) of the terminal 100 by using a first MCS that is obtained by adding an order (for example, adding one order) based on the third MCS used when the physical frame A is encoded and modulated; or
when a value of the ACK field is " 11", it indicates that the terminal 100 has received a previous frame of SLC PDU (namely, a user frame A) sent by the BeiDou network device 200, and the BeiDou network device 200 encodes and modulates a subsequent SLC PDU (namely, a user frame B) of the terminal 100 by using a first MCS that is obtained by subtracting an order (for example, subtracting one order) based on the third MCS used when the physical frame A is encoded and modulated.

The example shown in Table 6 is merely used to explain this application and shall not be construed as a limitation.
In some embodiments, when the data length of the ACK field may be fixed to 2 bits, if an MCS order type supported by the BeiDou network device 200 is less than or equal to 3, the terminal 100 may preferentially use the feedback mode shown in Table 5, and feed back the MCS information to the BeiDou network device 200 by using the ACK field in the ACK frame. If the MCS order type supported by the BeiDou network device 200 is greater than 3, the terminal 100 may preferentially use the feedback mode shown in Table 6, and feed back the MCS information to the BeiDou network device 200 by using the ACK field in the ACK frame.
S 1106: After receiving a first ACK, the BeiDou network device 200 determines an outbound MCS based on the first MCS indicated by the MCS indication field in the first ACK.
In a possible implementation, the outbound MCS is the same as the first MCS, and the BeiDou network device 200 may directly encode and modulate the physical frame by using the first MCS indicated by the terminal 100 in the MCS indication field.
In a possible implementation, the BeiDou network device 200 may determine the outbound MCS based on an actual outbound sending service quantity and the first MCS. For example, the terminal 400 indicates, by using the MCS indication field, the BeiDou network device 200 to send service data to the terminal 400 by using a fifth MCS. The BeiDou network device 200 may schedule a fifth user frame of the terminal 400 and the second user frame of the terminal 100 into the first physical frame. If an order of the fifth MCS is less than an order of the first MCS, the BeiDou network device 200 may encode and modulate the first physical frame by using the fifth MCS. If the order of the fifth MCS is greater than or equal to the order of the first MCS, the BeiDou network device 200 may encode and modulate the first physical frame by using the first MCS.
For example, the terminal 100 may indicate, by using an MCS indication field, the BeiDou network device 200 to send service data to the terminal 100 by using MCS1 (for example, QPSK and a coding rate of 1/2). The terminal 400 may indicate, by using an MCS indication field in a letter message download request frame, the BeiDou network device 200 to send service data to the terminal 400 by using MCS2 (QPSK and a coding rate of 3/4). When the BeiDou network device 200 schedules both the user frame B of the terminal 100 and the user frame 3 of the terminal 400 into one outbound physical frame, the BeiDou network device 200 may send, by using MCS 1 (for example, QPSK and a coding rate of 1/2), the physical frame B into which the user frame B and the user frame 3 are scheduled.
For another example, the terminal 100 may indicate, by using an MCS indication field, the BeiDou network device 200 to send service data to the terminal 100 by using MCS1 (for example, QPSK and a coding rate of 1/2). The terminal 400 may indicate, by using an MCS indication field in a letter message download request frame, the BeiDou network device 200 to send service data to the terminal 400 by using MCS2 (QPSK and a coding rate of 3/4). When the BeiDou network device 200 schedules both the user frame B of the terminal 100 and the user frame 3 of the terminal 400 into one outbound physical frame, the BeiDou network device 200 may send, by using MCS 1 (for example, QPSK and a coding rate of 1/2), the physical frame B into which the user frame B and the user frame 3 are scheduled.

In this way, when MCSs indicated by a plurality of terminals in a same outbound physical frame into which the user frames are scheduled are inconsistent, the BeiDou network device 200 may send the outbound physical frame by using an MCS with a lowest order in the MCSs indicated by the plurality of terminals, to ensure that the plurality of terminals can obtain respective user frames through parsing from the outbound physical frame.

In this embodiment of this application, the terminal 100 may be referred to as a first terminal, and the terminal 400 may be referred to as a second terminal.

S 1107: The BeiDou network device 200 adds the second user frame to be sent to the terminal 100 to a first physical frame, and encodes and modulates the first physical frame based on the outbound MCS.

S 1108: The BeiDou network device 200 sends first outbound data. The first outbound data includes pilot information of the S2C-p channel and a first physical frame encoded and modulated on the S2C-d channel.

S 1109: The terminal 100 obtains a second user frame of the terminal 100 through parsing from the first outbound data.

The terminal 100 may demodulate and decode the received first outbound data by using the determined first MCS. If the decoding succeeds, the terminal 100 may obtain the second user frame of the terminal 100 through parsing from the first physical frame.

If the terminal 100 fails to perform decoding, the terminal 100 may traverse other MCSs to decode the first outbound data until the decoding succeeds.

Specifically, a process in which the terminal 100 may decode the first outbound data may be as follows:

The terminal 100 demodulates and decodes the first outbound data by using a selected MCS. If a check value calculated by the terminal 100 based on a data segment in a decoded physical frame is the same as a value of a check bit field in the decoded physical frame, the terminal 100 determines that the decoding succeeds, and an MCS used by the terminal 100 when the decoding succeeds is an outbound MCS used by the BeiDou network device 200. If a check value calculated by the terminal 100 based on a data segment in a decoded physical frame is different from a value of a check bit field in the decoded physical frame, the terminal 100 determines that the decoding fails.

According to the outbound data transmission method in the BeiDou communication system provided in this embodiment of this application, when obtaining, through parsing, the third user frame delivered by the BeiDou network device 200, the terminal 100 can determine, by measuring the channel quality of the S2C-d channel, the MCS used when the BeiDou network device 200 sends service data to the terminal 100. When returning the ACK to the BeiDou network device 200, the terminal 100 may add an MCS indication field to the ACK. The MCS indication field may indicate an MCS used by the terminal 100 to indicate the BeiDou network device 200 to send the service data to the terminal 100. In this way, the terminal 100 can feed back an outbound MCS to the BeiDou network device 200 without additional signaling overheads, to improve channel utilization.

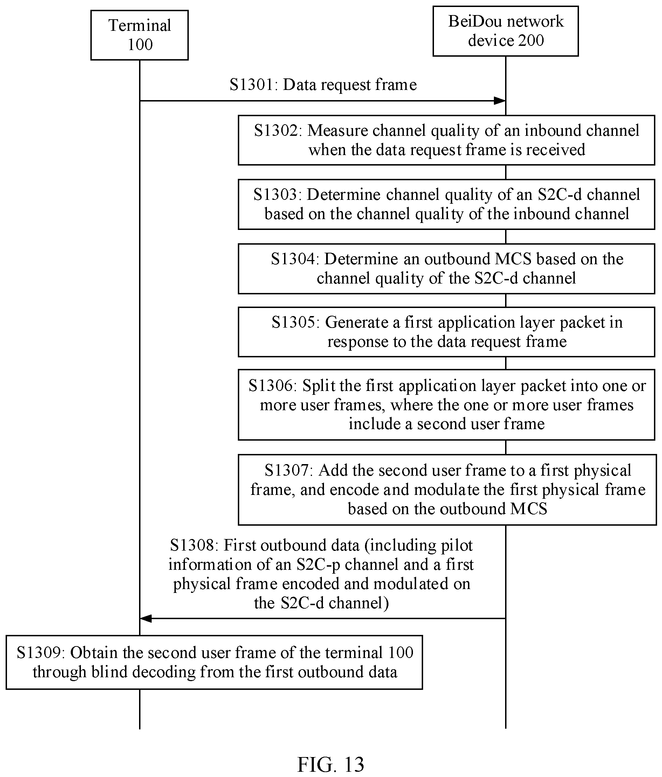

In some embodiments, the embodiment shown in FIG. 9 may be implemented in combination with an embodiment shown in FIG. 13.

Before the terminal 100 requests the BeiDou network device 200 to send data, the terminal 100 may determine the first MCS by measuring the channel quality of the S2C-p channel, and send the first MCS to the BeiDou network device 200 by using the first MCS indication field that carries the first MCS and that is of the data request frame, to indicate the BeiDou network device 200 to perform encoding and modulation by referring to the first MCS when the BeiDou network device 200 sends a first outbound user frame in the service data to the terminal 100. After receiving the first outbound user frame or an intermediate outbound user frame in the service data, the terminal 100 may measure the channel quality of the S2C-d channel, determine a fourth MCS based on the channel quality of the S2C-d channel, and send the fourth MCS to the BeiDou network device 200 by using a second MCS indication field that carries the fourth MCS and that is of an ACK frame, to indicate the BeiDou network device 200 to perform e encoding and modulation by referring to the fourth MCS when the BeiDou network device 200 sends a next user frame in requested service data to the terminal 100.

A detailed process is as follows:

1. Before sending a data request frame to the BeiDou network device 200, the terminal 100 may measure channel quality of the BeiDou network device 200 on a S2C-p channel, and determine a first MCS based on channel quality of the S2C-p channel.

2. The terminal 100 may send the data request frame to the BeiDou network device 200, where frame header information of the data request frame carries an MCS indication field, and the MCS indication field indicates the first MCS.

3. After receiving the data request frame, the BeiDou network device 200 may generate a first application layer packet, and split the first application layer packet into a plurality of user frames, where the plurality of user frames include a second user frame and a fourth user frame, the second user frame is a first user frame in the plurality of user frames, and the fourth user frame is a non-first user frame in the plurality of user frames.

4. The BeiDou network device 200 adds the second user frame to a first physical frame, and encodes and modulates the first physical frame by using an outbound MCS that is determined based on the first MCS.

5. The BeiDou network device 200 sends first outbound data, where the outbound data includes pilot information of the S2C-p channel and a first physical frame encoded and modulated on the S2C-d channel.

6. After receiving the first outbound data, the terminal 100 may obtain the second user frame of the terminal 100 through parsing based on the first outbound data.

7. After receiving a user frame A (the first user frame or the non-first user frame), the terminal 100 determines a fourth MCS by measuring channel quality of the S2C-d channel, and sends a first ACK to the BeiDou network device 200, where the first ACK carries a second MCS indication field, indicating the fourth MCS.

8. After receiving the first ACK, the BeiDou network device 200 may determine the outbound MCS based on the fourth MCS.

9. The BeiDou network device 200 may add a next user frame (for example, a fourth user frame) of the terminal 100 to a third physical frame, and encode and modulate the third physical frame by using the outbound MCS determined based on the fourth MCS.

10. The BeiDou network device 200 sends third outbound data to the terminal 100, where the third outbound data includes pilot information of the S2C-p channel and a third physical frame encoded and modulated on the S2C-d channel.

11. The terminal 100 obtains the fourth user frame of the terminal 100 through parsing from the third outbound data preferentially by using the fourth MCS.

When the BeiDou network device 200 sends a subsequent user frame of the service data requested by the terminal 100, the terminal 100 may cyclically perform steps 7 to 11.

For specific content in steps 1 to 11, refer to the content in the embodiments shown in FIG. 9 and FIG. 11. Details are not described herein again.

In some application scenarios, the BeiDou network device 200 cannot obtain a channel quality feedback of the terminal 100. For example, the BeiDou network device 200 sends a user frame to the terminal 100 in an unacknowledged mode. After receiving the user frame, the terminal 100 does not return an ACK to the terminal 100. The BeiDou network device 200 cannot obtain channel quality or an MCS fed back by the terminal 100. Therefore, the BeiDou network device 200 may measure channel quality of an inbound channel based on a data request frame sent by the terminal 100, to obtain channel quality of an outbound S2C-d channel through conversion. The BeiDou network device 200 may determine an outbound MCS based on the channel quality of the S2C-d channel. In this way, the BeiDou network device 200 may select the outbound MCS without additional signaling overheads, to improve channel utilization.

FIG. 13 is a schematic flowchart of an outbound data transmission method in a BeiDou communication system according to an embodiment of this application.

As shown in FIG. 13, the method includes the following steps.

S1301: The terminal 100 sends a data request frame to the BeiDou network device 200.

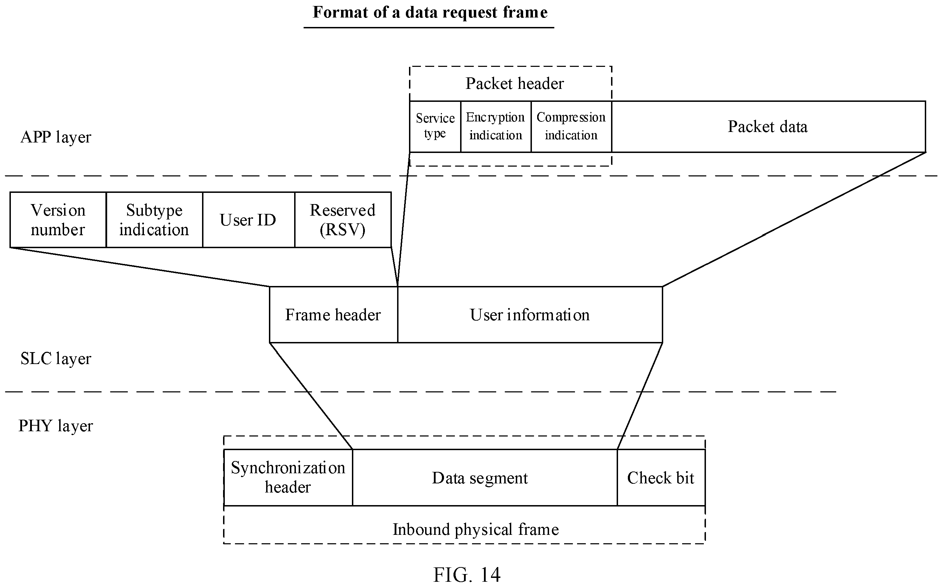

Specifically, in the BeiDou network device 200, the data request frame may include a letterbox profile query frame and a letter download frame. For frame formats of the letterbox profile query frame and the letter download frame, refer to FIG. 14.

As shown in FIG. 14, the inbound physical frame may include a synchronization header, a data segment, and a check bit. The synchronization header of the inbound physical frame may be used to distinguish a frame type of the inbound physical frame, and a time length of the synchronization header may be 40 ms. The frame type of the inbound physical frame may include a location reporting frame, an emergency rescue frame, and a packet communication frame. When the inbound physical frame is a packet communication frame, a frame type indicated by a value of the synchronization header is a packet communication frame. The check bit may be used to check integrity of data in the data segment. In the BeiDou communication system, cyclic redundancy check (CRC) may be used to check the data segment, and the check bit may include a CRC check code.

The data segment may include a user frame, and the user frame may include frame header information and user information. The frame header information may include a version number field, a subtype indication field, a user ID field, and a reserved (reserved, RSV) field. The version number field may indicate a protocol format version of the user frame. The subtype indication field may indicate a subtype of the user frame. The subtype of the user frame may include a general data frame, an ACK frame, a receipt frame, and the like. The user ID field may indicate a device identifier of the terminal 100.

The user information may include an application layer packet. The application layer packet may include a packet header and packet data. The packet header may include a service type field, an encryption indication field, and a compression indication field. The service type field may indicate a service type of the application layer packet. The service type of the application layer packet may include a letterbox profile query service, a letter download service, and a communication packet service.

When the service type of the application layer packet is the letterbox profile query service, the packet data may carry query information of the terminal 100, where the query information includes query time of the terminal 100, a quantity of messages that are sent by a specified user to the terminal 100 and that are queried by the terminal 100, and the like.

When the service type of the application layer packet is the letter download service, the packet data may carry an identifier of a letter message that the terminal 100 requests the BeiDou network device 200 to send.

S1302: The BeiDou network device 200 measures channel quality of an inbound channel when the data request frame is received.

S1303: The BeiDou network device 200 determines channel quality of an S2C-d channel based on the channel quality of the inbound channel.

In the BeiDou communication system, a link of the inbound channel and a link of the outbound S2C-d channel have a small difference in spatial transmission paths. However, because a frequency of the inbound channel is different from a frequency of the outbound S2C-d channel, the channel quality of the inbound channel is different from the channel quality of the outbound S2C-d channel.

After measuring the channel quality of the inbound and outbound channels, the BeiDou network device 200 may obtain the channel quality of the outbound S2C-d channel through conversion based on the channel quality of the inbound channel. The channel quality may include but is not limited to being measured by using an SNR.

The BeiDou network device 200 may determine an SNR of the outbound S2C-d channel based on Formula (2):

$$SNR_{Tx} = SNR_{Rx} + \triangle \quad \text{Formula (2)}$$

In Formula (2), $SNR_{Tx}$ is the SNR of the outbound S2C-d channel, $SNR_{Rx}$ is the SNR of the inbound channel, and $\triangle$ is a channel quality difference between the outbound S2C-d channel and the inbound channel. The channel quality difference has a time-varying characteristic. During specific implementation, the BeiDou network device 200 may periodically update the channel quality difference.

S1304: The BeiDou network device 200 determines an outbound MCS based on the channel quality of the S2C-d channel.

Specifically, the BeiDou network device 200 may determine the outbound MCS from a mapping table between an SNR and an MCS based on the SNR of the S2C-d channel. The mapping table between an SNR and an MCS may be obtained through physical layer simulation in the BeiDou communication system. For example, for the mapping table between an SNR and an MCS, refer to Table 1 in the embodiment shown in FIG. 9. Details are not described herein again.

S1305: The BeiDou network device 200 generates a first application layer packet in response to the data request frame.

Specifically, after receiving the data request frame, the BeiDou network device 200 may obtain the application layer packet through parsing from the data request frame, and distinguish the service type of the data request frame from the service type indication field of the application layer service packet.

If the service type of the data request frame is the letterbox profile query service, the terminal 100 generates the first application layer packet based on the query information.

If the service type of the data request frame is the letter download service, the terminal 100 obtains, through parsing, a message identifier that is sent by the BeiDou network device 200, that is requested by the terminal 100, and that is carried in the packet data of the data request frame. The BeiDou network device 200 may determine a first message from a letterbox of the terminal 100 based on the message identifier that is sent by the BeiDou network device 200 and that is requested by the terminal 100, and generate the first application layer packet based on the first message.

S1306: The BeiDou network device 200 splits the first application layer packet into one or more user frames, where the one or more user frames include a second user frame.

The second user frame may be any one of the one or more user frames in the first application layer packet.

Specifically, for a process in which the BeiDou network device 200 splits the first application layer packet into a plurality of user frames, refer to the protocol encapsulation process for the application layer packet in the embodiment shown in FIG. 7A, FIG. 7B, and FIG. 7C. Details are not described herein again.

S1307: The BeiDou network device 200 adds the second user frame to a first physical frame, and encodes and modulates the first physical frame based on the outbound MCS.

S1308: The BeiDou network device 200 sends first outbound data (including pilot information of the S2C-p channel and a first physical frame encoded and modulated on the S2C-d channel).

S1309: The terminal 100 obtains the second user frame of the terminal 100 through blind decoding from the first outbound data.

The BeiDou network device 200 sends the outbound data at a low rate (for example, 2 kbps or 4 kbps). The terminal 100 may perform decoding operations for a plurality of times (for example, 1000 times) within a transmission time (for example, 125 ms) of one physical frame. Therefore, the terminal 100 may obtain the second user frame of the terminal 100 through decoding from the first outbound data by using a blind decoding policy.

The terminal 100 may traverse different MCSs supported by the BeiDou network device 200, to demodulate and decode the first outbound data. If a check value (for example, a CRC check value) calculated by the terminal 100 based on a data segment in a decoded physical frame is the same as a value of a check bit field in the decoded physical frame, the terminal 100 determines that the decoding succeeds, and an MCS used by the terminal 100 when the decoding succeeds is an outbound MCS used by the BeiDou network device 200. If a check value calculated by the terminal 100 based on a data segment in a decoded physical frame is different from a value of a check bit field in the decoded physical frame, the terminal 100 determines that the decoding fails, and the terminal 100 demodulates and decodes the first outbound data again by using another MCS, until decoding on the first outbound data succeeds.

According to the outbound data transmission method in the BeiDou communication system provided in this embodiment of this application, the BeiDou network device 200 can measure the channel quality of the inbound channel based on the data request frame sent by the terminal 100, to obtain the channel quality of the outbound S2C-d channel through conversion. The BeiDou network device 200 may determine an outbound MCS based on the channel quality of the S2C-d channel. In this way, the BeiDou network device 200 may select the outbound MCS without additional signaling overheads, to improve channel utilization.

The foregoing content describes in detail the methods provided in this application. To better implement the foregoing solutions in embodiments of this application, an embodiment of this application further provides a corresponding apparatus or device.

In embodiments of this application, the terminal 100 may be divided into functional modules based on the foregoing method examples, for example, each functional module may be obtained through division based on each corresponding function, or two or more functions may be integrated into one processing module. The integrated module may be implemented in a form of hardware, or may be implemented in a form of a software functional module. It should be noted that, in embodiments of this application, module division is an example, and is merely a logical function division. During actual implementation, another division manner may be used.

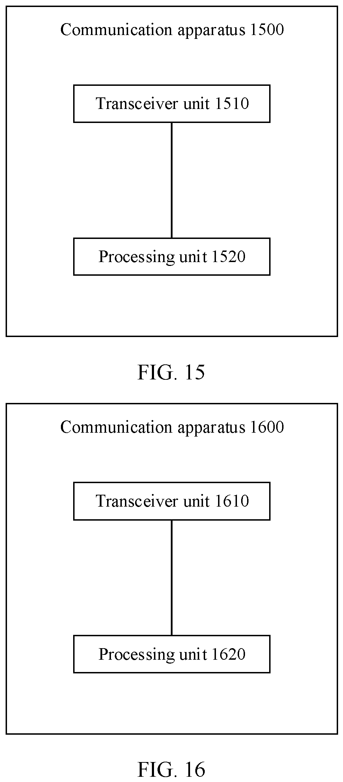

A communication apparatus in embodiments of this application is described in detail below with reference to FIG. 15 to FIG. 18.

When an integrated unit is used, refer to FIG. 15. FIG. 15 is a schematic diagram of a structure of a communication apparatus 1500 according to an embodiment of this application. The communication apparatus 1500 may be the terminal 100 in the foregoing embodiments. Optionally, the communication apparatus 1500 may be a chip/chip system, for example, a BeiDou communication chip. As shown in FIG. 15, the communication apparatus 1500 may include a transceiver unit 1510 and a processing unit 1520.

In a design, the transceiver unit 1510 may be configured to send a first user frame to a BeiDou network device. The first user frame carries a first modulation and coding scheme MCS indication field, and the first MCS indication field recommends that the BeiDou network device perform encoding and modulation by using a first MCS when sending a user frame of a first terminal.

The transceiver unit 1510 is further configured to receive first outbound data sent by the BeiDou network device, where the first outbound data includes a first physical frame encoded and modulated on a data channel and pilot information on a pilot channel.

The processing unit 1520 may be configured to obtain, through parsing from the first outbound data based on the first MCS, a second user frame sent by the BeiDou network device to the first terminal.

The first user frame may be a data request frame. For specific content, refer to the embodiment shown in FIG. 9. Optionally, the first user frame may alternatively be an ACK frame. For specific content, refer to the embodiment shown in FIG. 11. Details are not described herein again.

Optionally, the transceiver unit 1510 may be further configured to perform functional steps related to sending and receiving that are performed by the terminal 100 in the method embodiment shown in FIG. 9, FIG. 11, or FIG. 13.

Optionally, the processing unit 1520 may be further configured to perform functional steps related to decoding, channel quality measurement, or determining an MCS based on channel quality that are performed by the terminal 100 in the method embodiment shown in FIG. 9, FIG. 11, or FIG. 13.

It should be understood that the communication apparatus 1500 in this design may correspondingly perform the method steps performed by the terminal 100 in the foregoing embodiment. For brevity, details are not described herein again.

When an integrated unit is used, refer to FIG. 16. FIG. 16 is a schematic diagram of a structure of a communication apparatus 1600 according to an embodiment of this application. The communication apparatus 1600 may be the BeiDou network device 200 in the foregoing embodiments. Optionally, the communication apparatus 1600 may be a specific network element in the BeiDou network device 200, for example, one network element or a combination of a plurality of network elements in the BeiDou ground transceiver station 22, the BeiDou central station 23, and the BeiDou short packet converged communication platform 24. As shown in FIG. 16, the communication apparatus 1600 may include a transceiver unit 1610 and a processing unit 1620.

In a design, the transceiver unit 1610 may be configured to receive a first user frame sent by a first terminal, where the first user frame carries a first MCS indication field, and the first MCS indication field recommends that the BeiDou network device perform encoding and modulation by using a first MCS when sending a user frame of the first terminal.

The transceiver unit 1610 is further configured to: when an acknowledgment mode indicated by a combination of a first total frame quantity field and a first frame sequence number field is a parallel acknowledgment mode, continue to receive an SLC PDU that is in a first SLC SDU and that is sent by the terminal 100. In the parallel acknowledgment mode, the first total frame quantity field indicates a total quantity N of SLC PDUs in the first SLC SDU, and the first frame sequence number field indicates a frame sequence number of a first SLC PDU in the first SLC SDU.

The processing unit 1620 may be configured to: add a second user frame to be sent to the first terminal to a first physical frame, and encode and modulate the first physical frame by using the first MCS.

The transceiver unit 1610 is further configured to send first outbound data, where the first outbound data includes a first physical frame encoded and modulated on a data channel and pilot information on a pilot channel.

The first user frame may be a data request frame. For specific content, refer to the embodiment shown in FIG. 9. Optionally, the first user frame may alternatively be an ACK frame. For specific content, refer to the embodiment shown in FIG. 11. Details are not described herein again.

Optionally, the transceiver unit 1610 may be further configured to perform functional steps related to sending and receiving that are performed by the BeiDou network device 200 in the method embodiment shown in FIG. 9, FIG. 11, or FIG. 13.

Optionally, the processing unit 1620 may be further configured to perform functional steps related to encoding and modulation, channel quality measurement, or determining an outbound MCS that are performed by the BeiDou network device 200 in the method embodiment shown in FIG. 9, FIG. 11, or FIG. 13.

It should be understood that the communication apparatus 1600 in this design may correspondingly perform the method steps performed by the BeiDou network device 200 in the foregoing embodiment. For brevity, details are not described herein again.

The foregoing describes the terminal 100 and the BeiDou network device 200 in embodiments of this application. It should be understood that any product having a function of the terminal 100 in FIG. 15 and any product having a function of the BeiDou network device 200 in FIG. 16 fall within the protection scope of embodiments of this application.

In a possible product form, the terminal 100 in embodiments of this application may be implemented by using a general bus architecture.

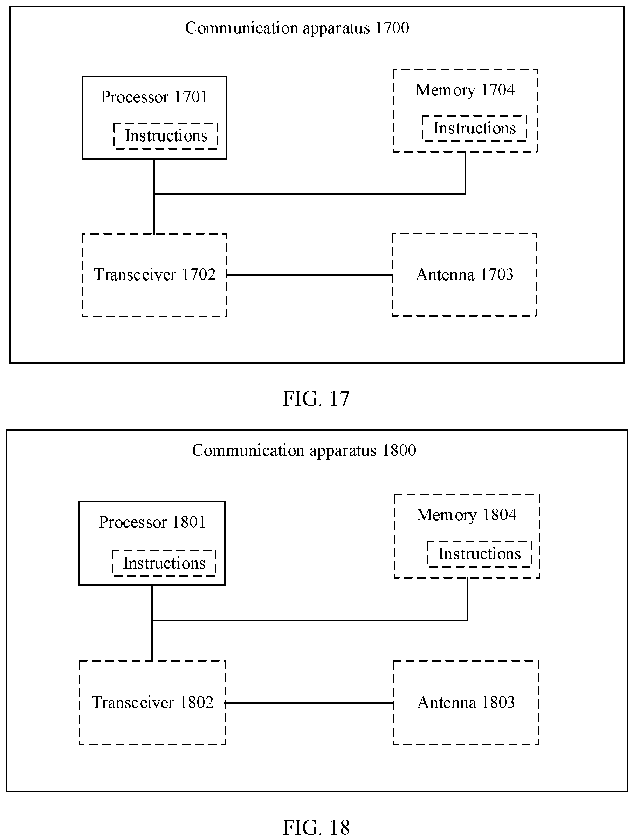

FIG. 17 is a schematic diagram of a structure of a communication apparatus 1700 according to an embodiment of this application. The communication apparatus 1700 may be the terminal 100 or an apparatus therein. As shown in FIG. 17, the communication apparatus 1700 includes a processor 1701 and a transceiver 1702 that is internally connected to and communicates with the processor. The processor 1701 is a general purpose processor, a dedicated processor, or the like. For example, the processor 1701 may be a satellite communication baseband processor or a central processing unit. The satellite communication baseband processor may be configured to process a satellite communication protocol and satellite communication data. The central processing unit may be configured to: control a communication apparatus (for example, a baseband chip, a terminal, or a terminal chip), execute a computer program, and process data of the computer program. The transceiver 1702 may be referred to as a transceiver unit, a transceiver machine, a transceiver circuit, or the like, and is configured to implement a transceiver function. The transceiver 1702 may include a receiver and a sender. The receiver may be referred to as a receiver machine, a receiver circuit, or the like, and is configured to implement a receiving function. The transmitter may be referred to as a transmitter machine, a transmitter circuit, or the like, and is configured to implement a sending function. Optionally, the communication apparatus 1700 may further include an antenna 1703 and/or a radio frequency unit (not shown in the figure). The antenna 1703 and/or the radio frequency unit may be located inside the communication apparatus 1700, or may be separated from the communication apparatus 1700, in other words, the antenna 1703 and/or the radio frequency unit may be remotely deployed or deployed in a distributed manner.

Optionally, the communication apparatus 1700 may include one or more memories 1704. The memory 1704 may store instructions. The instructions may be a computer program. The computer program may be run on the communication apparatus 1700, so that the communication apparatus 1700 performs the method described in the foregoing method embodiments. Optionally, the memory 1704 may further store data. The communication apparatus 1700 and the memory 1704 may be disposed separately, or may be integrated together.

The processor 1701, the transceiver 1702, and the memory 1704 may be connected through a communication bus.

In a design, the communication apparatus 1700 may be configured to perform the function of the terminal 100 in the foregoing embodiment. The processor 1701 may be configured to perform functional steps related to decoding, channel quality measurement, or determining an MCS based on channel quality that are performed by the terminal 100 in the embodiment shown in FIG. 9, FIG. 11, or FIG. 13, and/or another process of the technology described in this specification. The transceiver 1702 may be configured to perform functional steps related to sending and receiving that are performed by the terminal 100 in the embodiment shown in FIG. 9, FIG. 11, or FIG. 13, and/or another process of the technology described in this specification.

In any one of the foregoing designs, the processor 1701 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1701 may store instructions. The instructions may be a computer program. The computer program is run on the processor 1701, so that the communication apparatus 1700 can perform the method steps performed by the terminal 100 in the foregoing method embodiments. The computer program may be fixed in the processor 1701. In this case, the processor 1701 may be implemented by hardware.

In an implementation, the communication apparatus 1700 may include a circuit, and the circuit may implement the sending, receiving, or communication function in the foregoing method embodiments. The processor and the transceiver that are described in this application may be implemented on an integrated circuit (integrated circuit, IC), an analog IC, a radio frequency integrated circuit RFIC, a hybrid signal IC, an application specific integrated circuit (application specific integrated circuit, ASIC), a printed circuit board (printed circuit board, PCB), an electronic device, or the like. The processor and the transceiver may alternatively be manufactured by using various IC technologies, for example, a complementary metal oxide semiconductor (complementary metal oxide semiconductor, CMOS), an N-type metal oxide semiconductor (nMetal-oxide-semiconductor, NMOS), a P-type metal oxide semiconductor (positive channel metal oxide semiconductor, PMOS), a bipolar junction transistor (bipolar junction transistor, BJT), a bipolar CMOS (BiCMOS), silicon germanium (SiGe), and gallium arsenide (GaAs).

A scope of the communication apparatus described in this application is not limited thereto, and a structure of the communication apparatus may not be limited by FIG. 17. The communication apparatus 1700 may be an independent device or may be a part of a relatively large device. For example, the communication apparatus 1700 may be:

(1) an independent integrated circuit IC, a chip, or a chip system or subsystem;
(2) a set of one or more ICs, where optionally, the IC set may also include a storage component configured to store data and a computer program;
(3) an ASIC, for example, a modem (Modem);
(4) a module that can be embedded in another device;
(5) a receiver, a terminal, an intelligent terminal, a cellular phone, a wireless device, a handheld device, a mobile unit, a vehicle-mounted device, a network device, a cloud device, an artificial intelligence device, or the like; or
(6) other devices.

In a possible product form, any network element (for example, the BeiDou ground transceiver station 22, the BeiDou central station 23, or the BeiDou short packet converged communication platform 24) in the BeiDou network device 200 in embodiments of this application may be implemented by using a general bus architecture.

FIG. 18 is a schematic diagram of a structure of a communication apparatus 1800 according to an embodiment of this application. The communication apparatus 1800 may be the BeiDou network device 200 or an apparatus therein. As shown in FIG. 18, the communication apparatus 1800 includes a processor 1801 and a transceiver 1802 that is internally connected to and communicates with the processor. The processor 1801 is a general purpose processor, a dedicated processor, or the like. For example, the processor 1801 may be a satellite communication baseband processor or a central processing unit. The satellite communication baseband processor may be configured to process a satellite communication protocol and satellite communication data. The central processing unit may be configured to: control a communication apparatus (for example, a baseband chip), execute a computer program, and process data of the computer program. The transceiver 1802 may be referred to as a transceiver unit, a transceiver machine, a transceiver circuit, or the like, and is configured to implement a transceiver function. The transceiver 1802 may include a receiver and a transmitter. The receiver may be referred to as a receiver machine, a receiver circuit, or the like, and is configured to implement a receiving function. The transmitter may be referred to as a transmitter machine, a transmitter circuit, or the like, and is configured to implement a sending function. Optionally, the communication apparatus 1800 may further include an antenna 1803 and/or a radio frequency unit (not shown in the figure). The antenna 1803 and/or the radio frequency unit may be located inside the communication apparatus 1800, or may be separated from the communication apparatus 1800, in other words, the antenna 1803 and/or the radio frequency unit may be remotely deployed or deployed in a distributed manner.

Optionally, the communication apparatus 1800 may include one or more memories 1804. The memory 1804 may store instructions. The instructions may be a computer program. The computer program may be run on the communication apparatus 1800, so that the communication apparatus 1800 performs the method described in the foregoing method embodiments. Optionally, the memory 1804 may further store data. The communication apparatus 1800 and the memory 1804 may be disposed separately, or may be integrated together.

The processor 1801, the transceiver 1802, and the memory 1804 may be connected through a communication bus.

In a design, the communication apparatus 1800 may be configured to perform the function of the BeiDou network device 200 in the foregoing embodiment. The processor 1801 may be configured to perform functional steps related to encoding and modulation, channel quality measurement, or determining an outbound MCS that are performed by the BeiDou network device 200 in the embodiment shown in FIG. 9, FIG. 11, or FIG. 13, and/or another process of the technology described in this specification. The transceiver 1802 may be configured to perform functional steps related to sending and receiving that are performed by the BeiDou network device 200 in the embodiment shown in FIG. 9, FIG. 11, or FIG. 13, and/or another process of the technology described in this specification.

In any one of the foregoing designs, the processor 1801 may include a transceiver configured to implement receiving and sending functions. For example, the transceiver may be a transceiver circuit, an interface, or an interface circuit. The transceiver circuit, the interface, or the interface circuit configured to implement the receiving and sending functions may be separated, or may be integrated together. The transceiver circuit, the interface, or the interface circuit may be configured to read and write code/data. Alternatively, the transceiver circuit, the interface, or the interface circuit may be configured to transmit or transfer a signal.

In any one of the foregoing designs, the processor 1801 may store instructions. The instructions may be a computer program. The computer program is run on the processor 1801, so that the communication apparatus 1800 can perform the method steps performed by the terminal 100 in the foregoing method embodiments. The computer program may be fixed in the processor 1801. In this case, the processor 1801 may be implemented by hardware.

An embodiment of this application further provides a computer-readable storage medium. The computer-readable storage medium stores computer program code. When the foregoing processor executes the computer program code, an electronic device performs the method in any one of the foregoing embodiments.

An embodiment of this application further provides a computer program product. When the computer program product runs on a computer, the computer is enabled to perform the method in any one of the foregoing embodiments.

An embodiment of this application further provides a communication apparatus. The apparatus may exist in a product form of a chip. A structure of the apparatus includes a processor and an interface circuit. The processor is configured to communicate with another apparatus through the receive circuit, so that the apparatus performs the method in any one of the foregoing embodiments.

An embodiment of this application further provides a BeiDou communication system, including the terminal 100 and the BeiDou network device 200. The terminal 100 and the BeiDou network device 200 may perform the method in any one of the foregoing embodiments.

A short packet communication function in the BeiDou communication system is described in this application. It may be understood that another satellite system may also support the short packet communication function. Therefore, in addition to the BeiDou communication system, if another satellite system also supports the short packet communication function, the method described in this application is also applicable to communication of the another satellite system.

Method or algorithm steps described in combination with the content disclosed in this application may be implemented in a hardware manner, or may be implemented in a manner of executing software instructions by the processor. The software instructions may include a corresponding software module. The software module may be stored in a random access memory (Random Access Memory, RAM), a flash memory, an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may be a component of the processor. The processor and the storage medium may be disposed in an ASIC. In addition, the ASIC may be located in a core network interface device. Certainly, the processor and the storage medium may exist in the core network interface device as discrete components.

A person skilled in the art should be aware that in the foregoing one or more examples, functions described in this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer-readable storage medium and a communication medium, where the communication medium includes any medium that enables a computer program to be transmitted from one place to another. The storage medium may be any available medium accessible to a general-purpose or a dedicated computer.

The foregoing embodiments are merely intended for describing the technical solutions of this application, but not for limiting this application. Although this application is described in detail with reference to the foregoing embodiments, a person of ordinary skilled in the art should understand that modifications may still be made to the technical solutions described in the foregoing embodiments or equivalent replacements may be made to some technical features, and such modifications or replacements do not cause the essence of the corresponding technical solutions to depart from the scope of the technical solutions of embodiments of this application.

**Claims**

1. An outbound data transmission method in a BeiDou communication system, comprising:

    sending, by a first terminal, a first user frame to a BeiDou network device, wherein the first user frame carries a first modulation and coding scheme MCS indication field, and the first MCS indication field recommends that the BeiDou network device perform encoding and modulation by using a first MCS when sending a user frame of the first terminal;
    receiving, by the first terminal, first outbound data sent by the BeiDou network device, wherein the first outbound data comprises a first physical frame encoded and modulated on a data channel and pilot information on a pilot channel; and
    obtaining, by the first terminal through parsing from the first outbound data based on the first MCS, a second user frame sent by the BeiDou network device to the first terminal.

2. The method according to claim 1, wherein the first user frame is a data request frame, frame header information of the data request frame comprises the first MCS indication field, a value of the first MCS indication field indicates an order of the first MCS, and the data request frame is used to request the BeiDou network device to send service data to the first terminal; and
    before the sending, by a first terminal, a first user frame to a BeiDou network device, the method further comprises:

    receiving, by the first terminal, pilot information sent by the BeiDou network device on the pilot channel, and measuring channel quality of the pilot channel;
    determining, by the first terminal, channel quality of the data channel based on the channel quality of the pilot channel; and
    determining, by the first terminal, the first MCS from a mapping relationship between channel quality and an MCS based on the channel quality of the data channel.

3. The method according to claim 2, wherein the data request frame comprises a service type field, the service type field indicates a service type of the data request frame, a value of the service type field is a first value or a second value, the first value indicates that the service type of the data request frame is a letterbox profile query service, and the second value indicates that the service type of the data request frame is a letter message download service.

4. The method according to claim 2, wherein the channel quality of the pilot channel comprises a signal-to-noise ratio SNR of the pilot channel, and the channel quality of the data channel comprises an SNR of the data channel; and
    the first terminal determines the SNR of the data channel by using the following formula:

$$SNR_d = SNR_p + \delta,$$

    wherein $SNR_d$ is the SNR of the data channel, $SNR_p$ is the SNR of the pilot channel, and $\delta$ is a channel quality difference between the data channel and the pilot channel.

5. The method according to claim 1, wherein the first user frame is an acknowledgement identifier ACK frame; and
    before the sending, by a first terminal, a first user frame to a BeiDou network device, the method further comprises:

    receiving, by the first terminal, second outbound data sent by the BeiDou network device, wherein the second outbound data comprises a second physical frame encoded and modulated on the data channel and pilot information on the pilot channel;

obtaining, by the first terminal, a third user frame through decoding from the second physical frame by using a third MCS, and measuring channel quality of the data channel; and

determining, by the first terminal, the first MCS based on the channel quality of the data channel, wherein the first user frame indicates that the first terminal has received the third user frame.

6. The method according to claim 5, wherein frame header information of the first user frame comprises the first MCS indication field, and a value of the first MCS indication field indicates an order of the first MCS, or a value of the first MCS indication field indicates an order comparison result of the first MCS and the third MCS.

7. The method according to claim 5, wherein an ACK field of the ACK frame comprises the first MCS indication field, wherein

a value of the first MCS indication field indicates an order of the first MCS and whether the first terminal receives the second user frame sent by the BeiDou network device; or

a value of the first MCS indication field indicates an order comparison result of the first MCS and the second MCS and whether the first terminal receives the second user frame sent by the BeiDou network device.

8. The method according to any one of claims 2 to 4, wherein after the obtaining, by the first terminal through parsing from the first outbound data based on the first MCS, a second user frame sent by the BeiDou network device to the first terminal, the method further comprises:

sending, by the first terminal, a first ACK, wherein the first ACK indicates that the first terminal has received the second user frame sent by the BeiDou network device, the first ACK comprises a second MCS indication field, and the second MCS indication field recommends that the BeiDou network device perform encoding and modulation by using a fourth MCS when sending the user frame of the first terminal;

receiving, by the first terminal, third outbound data sent by the BeiDou network device, wherein the third outbound data comprises a third physical frame encoded and modulated on the data channel and pilot information on the pilot channel; and

obtaining, by the first terminal through parsing from the third outbound data based on the fourth MCS, a fourth user frame sent by the BeiDou network device to the first terminal.

9. An outbound data transmission method in a BeiDou communication system, comprising:

receiving, by a BeiDou network device, a first user frame sent by a first terminal, wherein the first user frame carries a first MCS indication field, and the first MCS indication field recommends that the BeiDou network device perform encoding and modulation by using a first MCS when sending a user frame of the first terminal;

adding, by the BeiDou network device, a second user frame to be sent to the first terminal to a first physical frame, and encoding and modulating the first physical frame by using the first MCS; and

sending, by the BeiDou network device, first outbound data, wherein the first outbound data comprises a first physical frame encoded and modulated on a data channel and pilot information on a pilot channel.

10. The method according to claim 9, wherein the first user frame is a data request frame, frame header information of the data request frame comprises the first MCS indication field, a value of the first MCS indication field indicates an order of the first MCS, and the data request frame is used to request the BeiDou network device to send service data to the first terminal; and

after the receiving, by a BeiDou network device, a first user frame sent by a first terminal, the method further comprises:

generating, by the BeiDou network device, a first application layer packet in response to the data request frame; and

splitting, by the BeiDou network device, the first application layer packet into one or more user frames, wherein the one or more user frames comprise the second user frame.

11. The method according to claim 10, wherein the data request frame comprises a service type field, the service type field indicates a service type of the data request frame, a value of the service type field is a first value, and the first value indicates that the service type of the data request frame is a letterbox profile query service; and

the generating, by the BeiDou network device, a first application layer packet in response to the data request frame specifically comprises:

generating, by the BeiDou network device, the first application layer packet based on letterbox profile information of the first terminal in response to the data request frame, wherein the letterbox profile information of the first terminal comprises one or more of a quantity of to-be-downloaded letter messages of the first terminal, sending time, and a sender identifier.

12. The method according to claim 10, wherein the data request frame comprises a service type field, the service type field indicates a service type of the data request frame, a value of the service type field is a second value, and the second value indicates that the service type of the data request frame is a letter message download service; and the generating, by the BeiDou network device, a first application layer packet in response to the data request frame specifically comprises:
obtaining, by the BeiDou network device, a first letter message through querying from a letterbox of the first terminal in response to the data request frame, and generating the first application layer packet based on the first letter message.

13. The method according to claim 9, wherein the first user frame is an ACK frame; and
before the receiving, by a BeiDou network device, a first user frame sent by a first terminal, the method further comprises:
adding, by the BeiDou network device, a third user frame to be sent to the first terminal to a second physical frame, and encoding and modulating the second physical frame by using a third MCS, wherein second outbound data comprises a second physical frame encoded and modulated on the data channel by using the third MCS and pilot information on the pilot channel, and the first user frame indicates that the first terminal has received the third user frame.

14. The method according to claim 13, wherein frame header information of the first user frame comprises the first MCS indication field, and a value of the first MCS indication field indicates an order of the first MCS, or a value of the first MCS indication field indicates an order comparison result of the first MCS and the third MCS.

15. The method according to claim 13, wherein an ACK field of the ACK frame comprises the first MCS indication field, wherein

a value of the first MCS indication field indicates an order of the first MCS and whether the first terminal receives the second user frame sent by the BeiDou network device; or
a value of the first MCS indication field indicates an order comparison result of the first MCS and the second MCS and whether the first terminal receives the second user frame sent by the BeiDou network device.

16. The method according to any one of claims 10 to 12, wherein after the sending, by the BeiDou network device, first outbound data, the method further comprises:

receiving, by the BeiDou network device, a first ACK sent by the first terminal, wherein the first ACK indicates that the first terminal has received the second user frame sent by the BeiDou network device, the first ACK comprises a second MCS indication field, and the second MCS indication field recommends that the BeiDou network device perform encoding and modulation by using a fourth MCS when sending the user frame of the first terminal;
adding, by the BeiDou network device, a fourth user frame to be sent to the first terminal to a third physical frame, and encoding and modulating the third physical frame by using the fourth MCS; and
sending, by the BeiDou network device, third outbound data, wherein the third outbound data comprises a fourth physical frame encoded and modulated on the data channel and pilot information on the pilot channel.

17. The method according to claim 9, wherein before the receiving, by a BeiDou network device, a first user frame sent by a first terminal, the method further comprises:

receiving, by the BeiDou network device, a fifth user frame sent by a second terminal, wherein the fifth user frame recommends that the BeiDou network device perform encoding and modulation by using a fifth MCS when sending a user frame of the second terminal; and
the adding, by the BeiDou network device, a second user frame to be sent to the first terminal to a first physical frame, and encoding and modulating the first physical frame by using the first MCS specifically comprises:
adding, by the BeiDou network device, the second user frame to be sent to the first terminal and the fifth user frame to be sent to the second terminal to the first physical frame, and encoding and modulating the first physical frame by using the first MCS.

18. The method according to claim 17, wherein an order of the first MCS is less than an order of the fifth MCS.

19. The method according to claim 17, wherein an order of the first MCS is equal to an order of the fifth MCS.

20. The method according to claim 17, wherein an order of the first MCS is greater than an order of the fifth MCS.

21. A BeiDou communication system, comprising a first terminal and a BeiDou network device, wherein

the first terminal is configured to perform the method according to any one of claims 1 to 8; and
the BeiDou network device is configured to perform the method according to any one of claims 9 to 20.

22. An outbound data transmission method in a BeiDou communication system, comprising:

receiving, by a BeiDou network device, a first user frame sent by a first terminal on an inbound channel;
measuring, by the BeiDou network device, channel quality of the inbound channel when receiving the first user frame;
determining, by the BeiDou network device, channel quality of a data channel based on the channel quality of the inbound channel;
determining, by the BeiDou network device, an outbound MCS from a mapping relationship between channel quality and an MCS based on the channel quality of the data channel;
adding, by the BeiDou network device, a second user frame to be sent to the first terminal to a first physical frame, and encoding and modulating the first physical frame by using the outbound MCS; and
sending, by the BeiDou network device, first outbound data, wherein the first outbound data comprises the first physical frame encoded and modulated on the data channel and pilot information on a pilot channel.

23. A communication apparatus, comprising one or more processors, one or more memories, and a transceiver, wherein the transceiver and the one or more memories are coupled to the one or more processors, the one or more memories are configured to store computer program code, the computer program code comprises computer instructions, and when the one or more processors execute the computer instructions, the communication apparatus is enabled to perform the method according to any one of claims 1 to 8.

24. The communication apparatus according to claim 23, wherein the communication apparatus is a first terminal.

25. A communication apparatus, comprising one or more processors, one or more memories, and a transceiver, wherein the transceiver and the one or more memories are coupled to the one or more processors, the one or more memories are configured to store computer program code, the computer program code comprises computer instructions, and when the one or more processors execute the computer instructions, the communication apparatus is enabled to perform the method according to any one of claims 9 to 20 or claim 22.

26. The communication apparatus according to claim 25, wherein the communication apparatus is a BeiDou network device.

27. A computer-readable storage medium, wherein the computer-readable storage medium stores instructions, and when the instructions are run on a computer, the computer is enabled to perform the method according to any one of claims 1 to 8.

28. A computer-readable storage medium, wherein the computer-readable storage medium stores instructions, and when the instructions are run on a computer, the computer is enabled to perform the method according to any one of claims 1 to 8.

29. A chip or a chip system, applied to a terminal, and comprising a processing circuit and an interface circuit, wherein the interface circuit is configured to receive code instructions and transmit the code instructions to the processing circuit, and the processing circuit is configured to run the code instructions to perform the method according to any one of claims 1 to 8.

**BeiDou communication system 10**

BeiDou short packet satellite 21

Terminal 100

BeiDou network device 200
BeiDou short packet converged communication platform 24

Short message service center 25

Cellular network

BeiDou ground transceiver station 22

BeiDou central station 23

Terminal 300

Emergency rescue platform 26

Emergency rescue center 27

SOS

FIG. 1

FIG. 2A

FIG. 2B

FIG. 3

FIG. 4

Base station      Terminal

1. System message

2. Initiate a link establishment request

3. Complete link establishment

4. RRC signaling: configuring a measurement signal, a measurement manner, and a reporting manner

5. Start measurement and obtain a measurement result

6. Report the measurement result

7. Set an appropriate MCS and send service data

FIG. 5

Antenna 1     Terminal 100     Antenna 2

| Mobile communication module 2G/3G/4G/5G [150] | Wireless communication module BT/WLAN/GNSS/NFC/IR/FM/Satellite communication [160] |

Speaker [170A]

Receiver [170B]

Microphone [170C]

Headset jack [170D]

Audio module [170]

Displays 1 to N [194]

Cameras 1 to N [193]

Indicator [192]

Motor [191]

Button [190]

Internal memory [121]

SIM card interfaces 1 to N [195]

External memory interface [120]

USB interface [130]

Charging input

Charging management module [140]

Power management module [141]

Battery [142]

Processor [110]

Sensor module [180]

Pressure sensor [180A]

Gyroscope sensor [180B]

Barometric pressure sensor [180C]

Magnetic sensor [180D]

Acceleration sensor [180E]

Distance sensor [180F]

Optical proximity sensor [180G]

Fingerprint sensor [180H]

Temperature sensor [180J]

Touch sensor [180K]

Ambient light sensor [180L]

Bone conduction sensor [180M]

FIG. 6

Message data convergence protocol (MDCP) layer

Application (APP) layer

TO FIG. 7B

MDCP PDU 0 — Follow-up indication / M_segment

MDCP PDU 1 — Follow-up indication / M_segment

TO FIG. 7B

MDCP PDU 2 — Follow-up indication / M_segment

MDCP SDU

Packet splitting

...
Encryption indication
Compression indication
Packet header

Encrypted data

Encryption

Compression indication
Compressed data

Compression

Original data

BeiDou network device 200

FIG. 7A

EP 4 369 632 A1

FIG. 7B

Physical (PHY) layer

FIG. 7C

EP 4 369 632 A1

CONT.
FROM
FIG. 7B

Message data convergence protocol (MDCP) layer | Application (APP) layer

**MDCP PDU 0** — Follow-up indication / M_segment

**MDCP PDU 1** — Follow-up indication / M_segment

**MDCP PDU 2** — Follow-up indication / M_segment

TO FIG. 8B

TO FIG. 8B

MDCP SDU

Packet assembly

Packet header: ... / Encryption indication / Compression indication

Encryption indication / Compression indication / Encrypted data

Decryption →

Compression indication / Compressed data

Decompression →

Original data

EP 4 369 632 A1

Terminal 100

FIG. 8A

44

S2C-d
branch:

| Version number |
| User frame (general data frame-terminal 500) |
| ... |
| User frame (general data frame-terminal 100) |
| Check bit |

Physical frame (114 ms)

| Version number |
| User frame (general data frame-terminal 100) |
| ... |
| User frame (ACK frame-terminal 400) |
| Check bit |

Physical frame (114 ms)

User frame (general data frame)

User frame (general data frame)

User frame (general data frame)

User frame (general data frame)

SLC PDU — Frame header / S_segment

SLC PDU — Frame header / S_segment

SLC PDU — Frame header / S_segment

SLC PDU — Frame header / S_segment

SLC SDU 0

SLC SDU 1

SLC SDU 2

TO FIG. 8C

CONT. FROM FIG. 8A

CONT. FROM FIG. 8A

Frame obtaining

Frame assembly

FIG. 8B

EP 4 369 632 A1

Receiving

S2C-p
branch:

S2C-d
branch:

S2C-d
branch:

S2C-d
branch:

| Secondary code (125 ms) | Physical slot (125 ms) | Spread modulated data (spread modulated data) | Modulated data (modulated data) | 11 ms | Reserved field |
| | | | | | Code data (code data) |

Decoding

| Secondary code (125 ms) | Physical slot (125 ms) | Spread modulated data (spread modulated data) | Modulated data (modulated data) | 11 ms | Reserved field |
| | | | | | Code data (code data) |

Decoding

Despreading

Demodulating

EP 4 369 632 A1

CONT.
FROM
FIG. 8B

FIG. 8C

```
┌─────────────┐                                    ┌─────────────────┐
│  Terminal   │                                    │ BeiDou network  │
│    100      │                                    │  device 200     │
└─────────────┘                                    └─────────────────┘
       │         S901: Pilot information of a pilot (S2C-p) channel    │
       │◄────────────────────────────────────────────────────────────│
┌──────┴───────────────────────────────────────┐                      │
│ S902: Measure channel quality of the S2C-p    │                      │
│ channel, and determine channel quality of a   │                      │
│ data (S2C-d) channel based on the channel     │                      │
│ quality of the S2C-p channel                  │                      │
└──────┬────────────────────────────────────────┘                     │
┌──────┴───────────────────────────────────────┐                      │
│ S903: Determine a first MCS based on the      │                      │
│ channel quality of the S2C-d channel          │                      │
└──────┬────────────────────────────────────────┘                     │
       │         S904: Data request frame (frame header               │
       │    information includes an MCS indication field              │
       │         indicating the first MCS)                            │
       │─────────────────────────────────────────────────────────────►│
       │        ┌──────────────────────────────────────────────┬──────┤
       │        │ S905: Generate a first application layer      │      │
       │        │ packet in response to the data request frame  │      │
       │        └──────────────────────────────────────────────┴──────┤
       │        ┌──────────────────────────────────────────────┬──────┤
       │        │ S906: Split the first application layer       │      │
       │        │ packet into one or more user frames, where    │      │
       │        │ the one or more user frames include a second  │      │
       │        │ user frame                                    │      │
       │        └──────────────────────────────────────────────┴──────┤
       │        ┌──────────────────────────────────────────────┬──────┤
       │        │ S907: Determine an outbound MCS based on the  │      │
       │        │ first MCS                                     │      │
       │        └──────────────────────────────────────────────┴──────┤
       │        ┌──────────────────────────────────────────────┬──────┤
       │        │ S908: Add the second user frame to a first    │      │
       │        │ physical frame, and encode and modulate a     │      │
       │        │ physical frame A based on the outbound MCS    │      │
       │        └──────────────────────────────────────────────┴──────┤
       │        S909: First outbound data (including pilot            │
       │   information of the S2C-p channel and a first               │
       │   physical frame encoded and modulated on the               │
       │◄──────────── S2C-d channel)─────────────────────────────────│
┌──────┴───────────────────────────────────────┐                      │
│ S910: Obtain the second user frame of the     │                      │
│ terminal 100 through parsing from the first   │                      │
│ outbound data                                 │                      │
└──────┬────────────────────────────────────────┘                     │
       │                                                              │
```

FIG. 9

**Format of a data request frame**

FIG. 10A

EP 4 369 632 A1

Encoding and modulation using a
modulation and coding scheme 1 (MCS-1)

Encoding and modulation using a
modulation and coding scheme 2 (MCS-2)

| User frame 4 | User frame 3 | User frame 2 | User frame 1 |

| User frame 6 | User frame 5 |

Scheduler
(scheduler)

Physical frame 1

| User frame 1 | User frame 2 |

Encoding and modulation using
the modulation and coding scheme
1 (MCS-1)

Physical frame 2

| User frame 5 | User frame 6 |

Encoding and modulation using
the modulation and coding scheme
2 (MCS-2)

Physical frame 3

| User frame 3 | User frame 4 |

Encoding and modulation using
the modulation and coding scheme
1 (MCS-1)

FIG. 10B

EP 4 369 632 A1

```
┌──────────────┐                                    ┌──────────────────┐
│   Terminal   │                                    │  BeiDou network  │
│     100      │                                    │   device 200     │
└──────┬───────┘                                    └────────┬─────────┘
       │                    ┌────────────────────────────────┴─────────┐
       │                    │ S1101: Add a second user frame of the     │
       │                    │ terminal 100 to a second physical frame,  │
       │                    │ and encode and modulate the second        │
       │                    │ physical frame based on a third MCS        │
       │                    └────────────────────────────────┬─────────┘
       │   ┌─────────────────────────────────────────────────┤
       │   │ S1102: Second outbound data (including pilot     │
       │   │ information of an S2C-p channel and a second     │
       │   │ physical frame encoded and modulated on an       │
       │◄──┤ S2C-d channel)                                   │
┌──────┴───────────────────────────┐                         │
│ S1103: Obtain a third user frame  │                         │
│ of the terminal 100 through       │                         │
│ parsing from the second outbound  │                         │
│ data                              │                         │
└──────┬───────────────────────────┘                         │
┌──────┴───────────────────────────┐                         │
│ S1104: Determine a first MCS      │                         │
│ based on channel quality of the   │                         │
│ S2C-d channel                     │                         │
└──────┬───────────────────────────┘                         │
       │ S1105: ACK (carrying an MCS indication field         │
       │ indicating the first MCS)                            │
       ├────────────────────────────────────────────────────►│
       │                    ┌────────────────────────────────┴─────────┐
       │                    │ S1106: Determine an outbound MCS based    │
       │                    │ on the first MCS                          │
       │                    └────────────────────────────────┬─────────┘
       │                    ┌────────────────────────────────┴─────────┐
       │                    │ S1107: Add the second user frame to be    │
       │                    │ sent to the terminal 100 to a first       │
       │                    │ physical frame, and encode and modulate   │
       │                    │ the first physical frame based on the     │
       │                    │ outbound MCS                              │
       │                    └────────────────────────────────┬─────────┘
       │   ┌─────────────────────────────────────────────────┤
       │   │ S1108: First outbound data (including pilot      │
       │   │ information of the S2C-p channel and a first     │
       │   │ physical frame encoded and modulated on the      │
       │◄──┤ S2C-d channel)                                   │
┌──────┴───────────────────────────┐                         │
│ S1109: Obtain the second user     │                         │
│ frame of the terminal 100 through │                         │
│ parsing from the first outbound   │                         │
│ data                              │                         │
└──────┬───────────────────────────┘                         │
       │                                                      │
```

FIG. 11

**Frame format of an inbound ACK frame**

| Version number | Subtype indication | User ID | Modulation and coding scheme (MCS) indication | Reserved (RSV) |
| --- | --- | --- | --- | --- |

| ACK field | Padding data |
| --- | --- |

SLC layer

| Frame header | User information |
| --- | --- |

PHY layer

| Synchronization header | Data segment | Check bit |
| --- | --- | --- |

Inbound physical frame

FIG. 12A

EP 4 369 632 A1

**Frame format of an inbound ACK frame**

FIG. 12B

EP 4 369 632 A1

```
┌──────────────┐                              ┌──────────────────┐
│   Terminal   │                              │ BeiDou network   │
│     100      │                              │  device 200      │
└──────┬───────┘                              └────────┬─────────┘
       │      S1301: Data request frame                │
       ├──────────────────────────────────────────────►│
       │     ┌────────────────────────────────────────────────┐
       │     │ S1302: Measure channel quality of an inbound    │
       │     │ channel when the data request frame is received │
       │     └────────────────────────────────────────────────┘
       │     ┌────────────────────────────────────────────────┐
       │     │ S1303: Determine channel quality of an S2C-d    │
       │     │ channel based on the channel quality of the     │
       │     │ inbound channel                                 │
       │     └────────────────────────────────────────────────┘
       │     ┌────────────────────────────────────────────────┐
       │     │ S1304: Determine an outbound MCS based on the   │
       │     │ channel quality of the S2C-d channel            │
       │     └────────────────────────────────────────────────┘
       │     ┌────────────────────────────────────────────────┐
       │     │ S1305: Generate a first application layer       │
       │     │ packet in response to the data request frame    │
       │     └────────────────────────────────────────────────┘
       │     ┌────────────────────────────────────────────────┐
       │     │ S1306: Split the first application layer packet │
       │     │ into one or more user frames, where the one or  │
       │     │ more user frames include a second user frame    │
       │     └────────────────────────────────────────────────┘
       │     ┌────────────────────────────────────────────────┐
       │     │ S1307: Add the second user frame to a first     │
       │     │ physical frame, and encode and modulate the     │
       │     │ first physical frame based on the outbound MCS  │
       │     └────────────────────────────────────────────────┘
       │  S1308: First outbound data (including pilot          │
       │  information of an S2C-p channel and a first          │
       │  physical frame encoded and modulated on              │
       │  the S2C-d channel)                                   │
       │◄─────────────────────────────────────────────────────┤
  ┌────────────────────────────────────────────────┐          │
  │ S1309: Obtain the second user frame of the      │          │
  │ terminal 100 through blind decoding from the    │          │
  │ first outbound data                             │          │
  └────────────────────────────────────────────────┘          │
       │                                                       │
```

FIG. 13

**Format of a data request frame**

FIG. 14

EP 4 369 632 A1

FIG. 15

FIG. 16

Communication apparatus 1700

Processor 1701

Instructions

Memory 1704

Instructions

Transceiver 1702

Antenna 1703

FIG. 17

Communication apparatus 1800

Processor 1801

Instructions

Memory 1804

Instructions

Transceiver 1802

Antenna 1803

FIG. 18

**INTERNATIONAL SEARCH REPORT**

| International application No. |
|---|
| **PCT/CN2022/113823** |

**A. CLASSIFICATION OF SUBJECT MATTER**

H04B 7/185(2006.01)i; H04W 4/14(2009.01)i

According to International Patent Classification (IPC) or to both national classification and IPC

**B. FIELDS SEARCHED**

Minimum documentation searched (classification system followed by classification symbols)

H04B; H04L; H04W

Documentation searched other than minimum documentation to the extent that such documents are included in the fields searched

Electronic data base consulted during the international search (name of data base and, where practicable, search terms used)

CNPAT, WPI, EPODOC, CNKI, 3GPP, IEEE: 用户, 请求帧, 报告, 开销, 包含, 北斗短报文, UE, 反馈, 告知, satellitetoc onsumerpilot, 上报, S2C-d, 基站, 出站, 调制, 编码, 信道, 发送, satellite, 卫星, 导频, consumer, 指示, 短报文, 确定, pilot, 参数, 网络, S2C, 终端, 减少, 下行, ACK, 北斗, 减小, 信令, S2Cp, 接入, S2C-p, 节省, 数据, 降低, 建议, MCS, report, determine, select, indicate, modulate, code, scheme, in, out, station, reduce, overhead, signal

**C. DOCUMENTS CONSIDERED TO BE RELEVANT**

| Category* | Citation of document, with indication, where appropriate, of the relevant passages | Relevant to claim No. |
|---|---|---|
| A | CN 111770458 A (NATIONAL UNIVERSITY OF DEFENSE TECHNOLOGY OF PLA) 13 October 2020 (2020-10-13) description, paragraphs [0031]-[0074] | 1-29 |
| A | WO 2019141195 A1 (HUAWEI TECHNOLOGIES CO., LTD.) 25 July 2019 (2019-07-25) entire document | 1-29 |
| A | CN 106797661 A (TOSHIBA CORP.) 31 May 2017 (2017-05-31) entire document | 1-29 |
| A | CN 103427937 A (CHINA ACADEMY OF TELECOMMUNICATIONS TECHNOLOGY) 04 December 2013 (2013-12-04) entire document | 1-29 |
| A | US 2014003330 A1 (QUALCOMM INC.) 02 January 2014 (2014-01-02) entire document | 1-29 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **12 November 2022** | **22 November 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2022/113823**

| Patent document cited in search report | | | Publication date (day/month/year) | Patent family member(s) | | | Publication date (day/month/year) |
|---|---|---|---|---|---|---|---|
| CN | 111770458 | A | 13 October 2020 | None | | | |
| WO | 2019141195 | A1 | 25 July 2019 | CN | 109150395 | A | 04 January 2019 |
| | | | | CN | 109150396 | A | 04 January 2019 |
| | | | | EP | 3644537 | A1 | 29 April 2020 |
| | | | | KR | 20200108342 | A | 17 September 2020 |
| | | | | JP | 2021510988 | W | 30 April 2021 |
| | | | | US | 2021203442 | A1 | 01 July 2021 |
| | | | | US | 2020099467 | A1 | 26 March 2020 |
| CN | 106797661 | A | 31 May 2017 | WO | 2016080335 | A1 | 26 May 2016 |
| | | | | JP | WO2016080335 | A1 | 24 August 2017 |
| | | | | EP | 3223571 | A1 | 27 September 2017 |
| | | | | US | 2017171886 | A1 | 15 June 2017 |
| CN | 103427937 | A | 04 December 2013 | None | | | |
| US | 2014003330 | A1 | 02 January 2014 | KR | 20150028320 | A | 13 March 2015 |
| | | | | WO | 2014003802 | A1 | 03 January 2014 |

Form PCT/ISA/210 (patent family annex) (January 2015)

**REFERENCES CITED IN THE DESCRIPTION**

**Patent documents cited in the description**

- CN 202110969792